# EUROPÄISCHE PATENTSCHRIFT

(11) **EP 2 116 650 B1**
(45) Veröffentlichungstag und Bekanntmachung des Hinweises auf die Patenterteilung: **25.06.2014**
(21) Anmeldenummer: 08075896.4
(22) Anmeldetag: 21.11.2008
(51) Int. Cl.: E02B 8/02

(54) **Rechenvorrichtung mit einer Einrichtung zur Räumung des Rechenguts**
Screening device with a device for removing the items being screened
Grille doté d'un dispositif pour enlever les déchets

(30) Priorität: 05.05.2008 DE 102008022167
(43) Veröffentlichungstag der Anmeldung: 11.11.2009
(73) Patentinhaber: Steinhardt, Jörg-Michael, Dipl.-Ing., 65232 Taunusstein (DE)
(72) Erfinder: Steinhardt, Jörg-Michael, Dipl.-Ing., 65232 Taunusstein (DE)
(74) Vertreter: Quermann, Helmut

(56) Entgegenhaltungen:
- EP-A1- 0 488 983
- WO-A1-99/49145
- DE-A- 19 515 924
- DE-A1- 19 617 665

## Beschreibung

Die Erfindung betrifft eine Rechenvorrichtung mit einer Einrichtung zur Räumung des Rechenguts, insbesondere zur Rückhaltung von in Abwasser mitgeführten Feststoffen an Entlastungen, wobei die Rechenvorrichtung durchströmt wird, mit einer Abwasserseite und einer Reinwasserseite, und eine Vielzahl von parallel zueinander angeordnete Rechenstäbe aufweist, die in Querträgern gelagert sind, sowie die Einrichtung zur Räumung des Rechenguts Abstreifer für das Rechengut aufweist, wobei jeweils zwischen benachbarten Rechenstäben ein Abstreifer angeordnet ist, der in Längsrichtung der Rechenstäbe verfahrbar ist, sowie der Abstreifer zumindest in seiner Verfahrrichtung einen sich verjüngenden Vorsprung aufweist, wobei der sich verjüngende Vorsprung auf seiner Abwasserseite bezüglich der Verfahrrichtung des Vorsprungs verjüngt und der Vorsprung zwischen den benachbarten Rechenstäben angeordnet ist.

Bei einer solchen Rechenvorrichtung wird somit diejenige Seite der Rechenvorrichtung, die dem Abwasser zugewandt ist, als Abwasserseite bezeichnet, während die andere Seite der Rechenvorrichtung, durch die im Wesentlichen nur Flüssigkeit gelangt, aus der das Rechengut geräumt ist, als Reinwasserseite bezeichnet.

In der Regenwasser- und Abwasserbehandlung gibt es die vielseitigsten Recheneinrichtungen, die von Thompson RPM im Dezember 2004 anlässlich einer Research-Studie für Walsh-Water erstellt wurde. Dort sind die gängigsten Recheneinrichtungen, ob geräumt und ungeräumt, ob als Rechen, als Sieb oder als Wabennetz ausgeführt dargestellt und auf ihre Effektivität im praktischen Einsatz getestet.

Die hier liegende Erfindung bezieht sich auf geräumte Recheneinrichtungen mit Stäben an Entlastungen.

Stabrechen gibt es in vielfältigster Ausführung, insbesondere sind hier Vorrichtungen, die gespannte Rechenstäbe haben, zu nennen. Sie haben keine Querstreben zur Unterstützung. Der Abstand der Rechenstäbe wird durch den Abstreifer eingerichtet. Die vorgespannten Stäbe haben einen Stababstand von vornehmlich 4 und 6 mm. Zwischen den Stäben sind Abstreifer so angeordnet, dass sie beim Verfahren in eine Richtung das Rechengut leicht anheben und unter diesen hindurchfahren, während bei der Rückwärtsfahrt mit einem steilen Teil des Abstreifers das Rechengut zu einer Seite transportiert wird. Das Rechengut muss mehrmals aufgenommen werden und kann somit zerkleinert. werden. Kompaktierung ist das Ergebnis, insbesondere am Ende der Rechenstäbe, wo sie mit den Rahmenträgern verspannt sind und das Rechengut von der wasserabgewandten Seite zur Wasserseite gegen den Wasserdruck schräg herauspressen müssen. Es entstehen Verfaserung, Kompaktierung, die zu Betriebsproblemen führen. Vorgespannte Stäbe sind nicht starr, d. h., sie können auf Grund des Wasserdruckes und der vorhandenen Geschwindigkeit, auf Grund der Turbulenz oder auch auf Grund des Wasserdruckes auseinanderdriften, sie können schwingen und somit birgt es die Gefahr, dass mit Wasserinhaltsstoffen auch kleine Steine zwischen die Stäbe kommen, womit es spätestens dann, wenn der Abstreifer hindurchfährt und die Stäbe zurechtrücken will, zu einem Verkanten kommt. Sollten die Steine sich nicht lösen, weil sie schon zu weit, auf Grund des Wasserdruckes und der auseinanderdriftenden Rechenstäbe, sich verkeilt haben, führt das dazu, dass die Anlage versagt.

Andere Rechenstäbe, die starr angeordnet sind, sind am Rechenstabende vor Kopf mit Rahmen starr verschweißt. Das Rechengut wird kompaktiert, insbesondere am Ende der Rechenstäbe, wo diese mit den Rahmenträgern verschweißt sind und das Rechengut von der wasserabgewandten Seite zur Wasserseite gegen den Wasserdruck schräg herauspressen müssen. Es entstehen Verfaserungen, Kompaktierungen, die zu Betriebsproblemen führen. Andere Rechenvorrichtungen werden z. B. mit geraden Flachstahl ca. alle 60 cm verschweißt, wobei die Enden nach hinten über den Flachstabrücken hinaus gebogen sind. Durch nach hinten gebogene Rechenstäbe können die Abstreifer, die auf der Reinwasserseite sitzen, durch die seitlich hochgezogenen Rechenstäbe hindurch drücken und die Wasserinhaltsstoffe das Rechengut wieder in das Abwassermedium zurückdrücken. Nachteilig sind der Aufwand, die Statik und die Kosten. Bei Starkregen überflutet der Rechen, wobei Wasserinhaltsstoffe auf die Rückseite des Rechens gelangen und zu einem Verklemmen führen. Gleiches gilt auch, wenn vom Einstieg Steine oder andere Sachen auf die Rechenstäbe gelangen.

Weiterhin werden bei diesen Rechenstäben, die flach liegend angeordnet sind, aber an dem Verschweißpunkt hochgezogen sind, Schmutzauffangräume angeordnet, die bei großen Entlastungsmengen mit großer Schmutzfracht und viel Rechengut wesentlich zu gering dimensioniert sind. Größere Dimensionierungen sind nicht möglich, da sonst Rechengutfläche verloren geht.

Eine Rechenvorrichtung der eingangs genannten Art, die als Flachrechen ausgebildet ist, ist in der DE 195 15 924 A1 beschrieben.

Eine Rechenvorrichtung, die als Flachrechen ausgebildet ist, ist aus der DE 42 15 002 A1 bekannt. Bei diesem Flachrechen sind die einzelnen Stäbe horizontal angeordnet, wobei der jeweilige Stab aus einem hochstehenden Flacheisen und einem Rundstab, der an der Unterseite des Flacheisens befestigt ist, gebildet ist.

In der WO 99/49145 ist gleichfalls ein Flachrechen mit geraden Rechenstäben beschrieben. Eine Einrichtung zur Räumung des Rechenguts weist Abstreifer auf, die zwischen die Rechenstäbe eingeführt sind. Der jeweilige Abstreifer weist in seinen beiden Bewegungsrichtungen Vorsprünge auf, die sich zu den freien Enden hin verjüngen. Auf seiner der Reinseite zugewandten Seite ist der jeweilige Abstreifer in Verfahrrichtung des Abstreifers angeordnet. In den beiden Endstellungen der Einrichtung zur Räumung des Rechenguts hintergreifen die Vorsprünge Querträger des Rahmens im Bereich von Ablageflächen der Querträger und kontaktieren diese, so dass Rechengut, das sich auf der Reinseite des Abstreifers abgesetzt hat, mittels einer Messerkante der Ablagefläche, entfernt wird.

In der WO 98/31882 ist eine Rechenvorrichtung beschrieben, bei der der jeweiliege Rechenstab einen geraden langen Abschnitt und im stumpfen Winkel zu diesem angeordnete, von der Abwasserseite zur Reinwasserseite gerichtete Ansätze aufweist, deren freie Enden mit Trägern des Rahmens verbunden sind. Es ist gleichfalls eine Einrichtung zur Räumung des Rechenguts mit Abstreifern vorgesehen, wobei der jeweilige Abstreifer in seinen Endstellungen zwischen die im jeweiligen Endbereich der Stäbe angeordneten Abschnitte gelangt und Rechengut auf der zugeordneten Trägerplatte ablegt.

In der WO 01/75240 A1 ist eine Rechenvorrichtung der eingangs genannten Art beschrieben, bei der die Rechenstäbe zur Abwasserseite hin entlang eines Kreisbogens gekrümmt sind. Der Kreismittelpunkt der Abwasserseite und der Reinwasserseite des Stabes ist identisch. Oberhalb der Rechenstäbe ist eine Einrichtung zur Räumung des Rechenguts horizontal verfahrbar, wobei diese Einrichtung Abstreifer aufweist und der jeweilige Abstreifer in einer Position auf etwa halber Länge des jeweiligen Rechenstabes gerade bis zur abwasserseitigen Begrenzung des Rechenstabes ragt und mit zunehmender Verfahrbewegung des jeweiligen Abstreifers in Richtung des jeweiligen Endbereiches des Rechenstabes dieser zunehmend auf der Abwasserseite der Rechenstabanordnung austritt. In der Endstellung hintergreift der Abstreifer mit einem parallel zu seiner Verfahrrichtung angeordneten Abschnitt eine Trägerplatte zur Lagerung der Rechenstäbe im Bereich der Rechenstabenden und fördert Rechengut ab, das sich auf der Abwasserseite der Trägerplatte befindet.

Die zum Stand der Technik diskutierten Rechenvorrichtungen weisen die eingangs ausführlich erörterten Nachteile auf.

Eine Rechenvorrichtung, die die Merkmale des Oberbegriffs des Patentanspruchs 1 aufweist, ist aus der DE 195 15 924 A1 bekannt. Bei dieser ist der jeweilige Abstreifer auf seiner der Reinseite zugewandten Seite in Verfahrrichtung des Abstreifers angeordnet. Diese Seite des Abstreifers ist geringfügig unterhalb der oberen Begrenzung der benachbart dem Abstreifer angeordneten Rechenstäbe der Rechenvorrichtung positioniert. Der der Abwasserseite zugewandte, sich verjüngende Vorsprung des jeweiligen Abstreifers weist, zwischen dem diesem Abstreifer benachbarten Rechen angeordnet, eine Austragungsfläche unter einem spitzen Winkel und, auf einem tieferen Niveau als die Rechenstäbe, eine Förderfläche auf, die unter einem stumpferen Winkel angeordnet ist. Durch diese Gestaltung des Abstreifers wird durch diesen Rechengut mit einer Bewegungskomponente zur Abwasserseite hin transportiert.

Aufgabe der vorliegenden Erfindung ist es, eine Rechenvorrichtung der eingangs genannten Art so weiter zu bilden, dass das Rechengut, ohne es zu kompaktieren, geräumt werden kann.

Gelöst wird die Aufgabe dadurch, dass der sich verjüngende Vorsprung auf seiner Reinwasserseite bezüglich der Verfahrrichtung des Vorsprungs verjüngt.

Durch diese Ausbildung des jeweiligen Abstreifers im Bereich seines bezogen auf die Verfahrrichtung des Abstreifers vorlaufenden Vorsprungs ist sichergestellt, dass beim Verfahren des Abstreifers der Vorsprung auf seiner Abwasserseite aufgrund der sich verjüngenden Gestaltung zwischen den benachbarten Recherchenstäben angeordnetes Rechengut mit einer Bewegungskomponente senkrecht zur Verfahrrichtung des Abstreifers bewegt, somit aus dem Zwischenraum zwischen den benachbarten Rechenstäben heraus und entsprechendes auf der Reinwasserseite geschieht, weil dort der der Reinwasserseite zugewandte Bereich des Vorsprungs aufgrund seiner Verjüngung entsprechend auf dort befindliches Rechengut einwirkt. Da der Vorsprung zwischen den benachbarten Rechenstäben angeordnet ist, ist beim Verfahren des Abstreifers immer sichergestellt, dass Rechengut, das sich zwischen benachbarten Rechenstäben befindet, entweder mit der einen oder anderen Kontur des sich verjüngenden Vorsprungs in Kontakt gelangt und mit einer Bewegungskomponente zur Abwasserseite bzw. zur Reinwasserseite hin transportiert wird. Es kommt somit nicht zu einer Kompaktierung des Rechenguts beim Räumen.

Dieser Räumeffekt lässt sich noch verbessern, wenn sich die der Abwasserseite und/oder der Reinwasserseite zugewandten Konturen des Vorsprungs beim Verfahren des Abstreifers relativ zu den der Abwasserseite und/oder der Reinwasserseite zugewandten Konturen der Rechenstäbe verändern, dahingehend, dass der Vorsprung abwasserseitig und/oder reinwasserseitig mit einem Teilbereich des Vorsprungs aus dem Spalt zwischen benachbarten Rundstäben heraustritt oder stärker heraustritt. Insbesondere wird der Vorsprung beim Verfahren in seiner Verfahrrichtung mit einer Bewegungskomponente in Richtung der Abwasserseite der benachbarten Rechenstäbe bewegt.

Die Rechenvorrichtung ist insbesondere derart gestaltet, dass sie von unten nach oben durchströmt wird, mit einer unteren Abwasserseite und einer oberen Reinwasserseite. Bei dieser Durchströmungsrichtung werden die im Abwasser mitgeführten Feststoffe mit geringerem Druck gegen die Rechenstäbe gedrückt als bei einer Durchströmung der Rechenvorrichtung von oben nach unten.

Es ist insbesondere vorgesehen, dass die zwischen den Rechenstäben angeordneten Abstreifer hin und her verfahrbar sind, wobei der jeweilige Abstreifer auf abgewandten Seiten sich verjüngende Vorsprünge aufweist. Grundsätzlich ist es aber gleichfalls denkbar, dass die Abstreifer nicht hin und her verfahren werden, sondern die Rechenvorrichtung und damit die Abstreifer umlaufend betrieben werden. Bevorzugt wird aber die Anordnung mit hin und her verfahrbaren Abstreifern angesehen, so dass die Möglichkeit besteht, in nicht all zu großen Abständen Ruhezonen anzuordnen und somit in den Umkehrpunkten der Abstreifer geräumtes Rechengut dort abzulegen. Die bidirektionale Verfahrbarkeit der Abstreifer wird demnach bevorzugt angestrebt.

Unter diesem Aspekt wird es als besonders vorteilhaft angesehen, wenn die Vorsprünge, in den Endstellungen des Abstreifers, die Querträger im Bereich von Ablageflächen der Querträger hintergreifen, wobei die Ablageflächen der Abwasserseite der Vorrichtung zugewandt sind. Insbesondere ist in den Endstellungen des Abstreifers, zwischen den Vorsprüngen und den Ablageflächen, ein sich in Richtung des freien Endes des jeweiligen Vorsprungs erweiternder Spalt gebildet.

Der Spalt in den Endstellungen des Abstreifers zwischen den Vorsprüngen und den Ablageflächen der Querträger gewährleistet, dass das Rechengut nach dem Austragen aus dem zwischen zwei benachbarten Rechenstäben gebildeten Spalt nicht im Bereich des jeweiligen Querträgers kompaktiert wird, sondern infolge der sich in Bewegungsrichtung des Abstreifers erweiternden Gestaltung des Spaltes ausreichend Spaltraum geschaffen ist, um das Rechengut zur Seite zu fördern. Da das Rechengut im Bereich des jeweiligen Querträgers nicht kompaktiert wird, kann es in diesem strömungsberuhigten Bereich, somit der Ruhezone, benachbart des Querträgers absinken und mit dem Abwasser abgefördert werden.

Die Ruhezone im Abwasser ist kein Schmutzfangraum, sondern eine Ablösezone. Normalerweise drückt das Abwasser die Schmutzstoffe an die Stäbe heran.

Ab einer gewissen Schmutzdicke schiebt dann die Einrichtung zum Räumen bidirektional das Rechengut zu beiden Seiten, zu den Ruhe-/Ablösezonen im Bereich der Querträger. Da dort kein Wasserdruck herrscht, können größere Ansammlungen von Rechengut nach unten absinken und vom ablaufenden Wasser zur Kläranlage abtransportiert werden.

Das Rechengut kann somit schonend, auf kurzem Wege abgestreift werden und es nehmen die Ruhezonen, die als flache breite Querträger ausgebildet sind, den Wasserdruck auf und tragen insbesondere in eine Gitterrahmenkonstruktion ab, die die Rechenstäbe aufnimmt und vorzugsweise modular aufgebaut ist.

Es werden beispielsweise im festen Abstand, zum Beispiel in einem Abstand von ca. 65 cm, die Querträger bzw. Querstreben als Flachplatten so eingelegt, dass zwischen den Stabreihen-Modulen ein Abstand entsteht, der als Ruhezone auf der Abwasser- und Reinwasserseite dient.

Vorzugsweise kontaktiert der Abstreifer in seinen Endstellungen die Querträger entlang einer Linie. Demzufolge ist der Spalt im Bereich seines in Bewegungsrichtung des Abstreifers nachlaufenden Endes geschlossen. Hierdurch kann beim Verfahren des Abstreifers in seine Endstellungen kein Rechengut durch den Spalt hindurchtreten. Je nach dem vorherrschenden Rechengut kann es aber durchaus vorteilhaft sein, statt der genannten Linienkontaktierung einen gewissen Abstand in diesem Bereich zwischen dem Abstreifer und dem Querträger einzuhalten. In diesem Fall könnte insbesondere Wasser durch das sich verjüngende Spaltende hindurchtreten und gegebenenfalls auch ein geringer Anteil von Rechengut beim Überführen des Abstreifers in seine Endstellungen.

Der jeweilige Abstreifer ist vorzugsweise plattenförmig ausgebildet und weist eine Stärke auf, die geringfügig geringer ist als die Spaltdicke zwischen benachbarten Rechenstäben.

Eine bevorzugte Gestaltung sieht vor, dass die Vorsprünge des jeweiligen Abstreifers gekrümmt sind, insbesondere nach innen oder außen gekrümmt sind. Diese Gestaltung der Vorsprünge bezieht sich sowohl auf die Abwasserseite als auch auf die Reinwasserseite des jeweiligen Abstreifers. Gemäß einer alternativen Gestaltung sind die Vorsprünge des jeweiligen Abstreifers insbesondere in Richtung des freien Endes des jeweiligen Vorsprungs konisch zulaufend ausgebildet.

Vorzugsweise weist der Abstreifer auf der Abwasserseite, an den Vorsprung angrenzend bzw. zwischen den Vorsprüngen dieses Abstreifers, einen erhabenen Abschnitt auf. Dessen abwasserseitige Kontur ist insbesondere stetig gekrümmt oder verläuft annähernd parallel zur Verfahrrichtung des Abstreifers.

Der Abstreifer ist demnach vorzugsweise so geformt, dass
a) eine Beruhigung des Wasserdurchflusses zwischen den Rechenstäben in diesem Bereich erfolgt (beispielsweise mittels abgerundeter Abstreifer) und
b) aufgrund der Form, insbesondere einer Kurvenform des Abstreifers, dieser die Wasserinhaltsstoffe, die zwischen die Rechenstäbe gelangen, automatisch herausschert und
c) der obere Teil des Abstreifers auf dem Rechen liegende Rückstände aus den Stahlabständen heraushebt und auf den Querträgern zwischenlagert.

Der Abstreifer wirkt somit in Art eines Strömungsteilers.

Das Räumergebnis beim Betreiben der Rechenvorrichtung lässt sich dadurch optimieren, dass die Abstreifer in Richtung der Abwasserseite und/oder der Reinwasserseite verstellbar sind. Hierdurch ist gewährleistet, dass sich der Abstreifer und damit dessen Vorsprung bzw. dessen Vorsprünge optimal im Zwischenraum zwischen benachbarten Rechenstäben positionieren lassen und damit durch definierte Positionierung von Abstreifer und Rechenstab unmittelbar auf die Austragsgeometrie von Abstreifer und mit diesem zusammenwirkenden Rechenstäben Einfluss genommen werden kann.

Anstelle des Abstreifers können zusätzlich angeordnete Bürsten vor dem Abstreifer beidseitig diese Aufgabe übernehmen.

Die Reduzierung des Strömungsdrucks ist von besonderer Bedeutung für einen schonenden Rechenguttransport und vor allem qualitätssteigernd, da das Rechengut nicht zerkleinert wird. Alternativ kann auf der Rückseite der abwasserabgewandten Seite ein Blech an dem jeweiligen Abstreifer so angeordnet werden, dass beim Verfahren von der abwasserabgewandten Seite ein Wassergegendruck entsteht und der Andruck des Rechenguts wesentlich verringert wird.

Die Rechenstäbe der Rechenvorrichtung sind vorzugsweise so gestaltet, dass Rechenstäbe, insbesondere alle Rechenstäbe, zum Ende hin flacher werdend gestaltet sind.

Die Rechenstäbe sind so geformt, dass sie einerseits mit wenig Material große Kräfte aufnehmen, aber gleichzeitig überall ungefähr den gleichen Widerstand bei Durchströmung haben. Es wird ein Kraft-Fachwerk im Rechenstab ausgebildet, so dass der jeweilige Rechenstab zu den Enden hin flacher wird. Da die Wasserteilchen durch den Stabrechen zu den im Bereich der Stabenden befindlichen Ruhezonen einen schrägen Weg nehmen, würde dieser länger, wenn nicht die Stabenden flacher würden. Aufgrund der zu den Enden hin flacher werdenden Gestaltung der Rechenstäbe bleibt der Widerstand des Rechens, insbesondere wenn er horizontal, somit liegend eingebaut wird, überall nahezu gleich.

Von besonderem Vorteil ist, wenn die Rechenvorrichtung absolut flach bauend ist und auch bei niedrigen Bauwerken ohne zusätzliche Währertüchtigungen, ohne dass Überfallkanten oder Schachtdecken abgebrochen werden müssen, eingebaut werden kann. Der Rahmen kann insbesondere bis zu einem Hydraulikantrieb gekürzt werden.

Vorzugsweise ist die Rechenvorrichtung als Flachrechen oder Bogenrechen ausgebildet. Die Gestaltung des Bogenrechens ist besonders vorteilhaft.

Je nach Leistung können die Rechenstäbe so gebogen angeordnet werden, dass das Rechengut in tiefere Schichten abgesenkt wird und dort einfacher und mit weniger Strömungsdruck entsprechend vom ablaufenden Wasser zur Kläranlage abtransportiert werden kann.

Bei einem Bogenrechen sind die Rechenstäbe vorzugsweise so geformt, dass der jeweilige Rechenstab auf der Abwasserseite einen geringeren gekrümmten Radius hat als der Radius des Rechenstabes auf der Reinwasserseite.

Unabhängig, ob die Rechenvorrichtung als Flach- oder Bogenrechen ausgebildet ist, weisen die Rechenstäbe, senkrecht zur Durchströmungsrichtung des Reinwassers durch die Rechenvorrichtung, vorzugsweise identische Stärke auf. Die Rechenstäbe sind, in Durchströmungsrichtung des Reinwassers, insbesondere hochkant angeordnet. Sie weisen vorzugsweise einen rechteckigen Querschnitt auf.

Die Verfahrrichtung der Abstreifer und damit des bzw. der Vorsprünge ergibt sich aus den Vorgaben der geometrischen Anordnung der Rechenstäbe. Bei einem Bogenrechen ist eine Verfahrrichtung der Abstreifer bzw. des Vorsprungs/der Vorsprünge entlang eines Kreisbogens vorteilhaft, während bei einem Flachrechen eine Verfahrrichtung des Abstreifers bzw. des Vorsprungs/der Vorsprünge, die geradlinig ist, vorzuziehen ist.

Bei der Rechenvorrichtung handelt es sich insbesondere um einen Feinrechen mit einem Stababstand von hauptsächlich 4 bis 6 mm. Auch größere Stababstände sind möglich.

Gemäß einer bevorzugten Ausführungsform der Erfindung ist vorgesehen, dass bei der Rechenvorrichtung, sei es beim Flachrechen oder Bogenrechen, stehende Stäbe verwendet werden, die am Ende einen Aufsatz (Vater-Stück) von mehreren mm Höhe und Breite haben und einfach und kostengünstig in die kraftabtragenden Querträger bzw. Querstreben des Rahmens mit vorbereiteten entsprechenden Ausklinkungen (Mutter-Stück) einsteckbar sind und mit diesen schnell verschweißt werden können. Die Querstreben sind insbesondere auf deren Oberseite angefast, damit auf dem Rechen auf dessen Reinwasserseite liegende Steine auf die Ruhezone geschoben werden können und ein Versagen der Vorrichtung wegen Verklemmen ausgeschlossen ist.

Da die Ausführungsform des Flachrechens in seiner Leistungsfähigkeit begrenzt ist, wird, um die Leistungsfähigkeit zu steigern, bevorzugt ein Bogenrechen verwendet. Bei diesem sind die Rechenstäbe dann insbesondere kreisförmig angeordnet, vornehmlich über einen Winkel von 90 bis 120°. Die Ausführungsform der Rechenstäbe ist vorzugsweise so gewählt, dass ohne Verlust von Material bei einem Halbmond von 120° die Rechenstäbe so angeordnet werden können, dass mehrere Rechenstäbe hintereinander ohne Verlust geschnitten werden können.

Das Wasser hat aufgrund der Durchströmung zwischen den Rechenstäben hydraulische Verluste zu überwinden. Bei einem runden Rechen werden an den äußeren Ecken die Durchströmungsrichtungen senkrecht zur Rechenoberfläche sein, sondern immer etwas schräg. Dieses würde bedeuten, dass hier größere Widerstände aufgrund des größeren Wasserweges zwischen den Rechenstäben entstehen. Um dieses zu kompensieren, sind die Rechenstäbe im Bereich der Enden dünner als in der Mitte. Der Rundrechen wird auf Zug beansprucht, so dass die Rechenstäbe grundsätzlich flacher gestaltet werden können, als Rechenstäbe, die auf Druck ausgelegt sind. Hierdurch kann
a) eine höhere hydraulische Leistung wegen geringerer Widerstände zwischen den Rechenstäben gefahren werden und
b) aufgrund der flacheren Rechenstäbe mit wesentlich weniger Material und aufgrund der aneinanderliegenden Halbmondtechnik mit weniger Verschnitt ein kostengünstiger Rechen mit wesentlich höherer Durchsatzleistung von ca. 30° gefertigt werden.

Vornehmlich dient die erfindungsgemäße Rechenvorrichtung zur Anordnung und Absicherung von Entlastungsschwellen im Misch- und Trennsystem, zur Absicherung von Gewässern vor Hygieneartikeln und Toilettenpapier. Die erfindungsgemäße Einrichtung zur Räumung des Rechenguts wird insbesondere ohne Fremdenergie über Wasserrad oder hydraulisch, elektrisch oder pneumatisch angetrieben. Auch kann ein Wasserrad eine Pumpe antreiben, die einen hydraulischen Kolben und/oder Motor des Rechengutabstreifers antreibt.

Weitere Merkmale der Erfindung sind in der Unteransprüchen, der Beschreibung der Figuren und den Figuren selbst dargestellt, wobei bemerkt wird, dass alle Einzelmerkmale und alle Kombinationen von Einzelmerkmalen weitere erfinderische Ausgestaltungen darstellen.

Es zeigt:
- Figur 1: in einer schematischen Darstellung einen Schnitt quer zur Längserstreckung eines Kanals und einer den Kanal seitlich begrenzenden Überfallwand, mit der Rechenvorrichtung, die als Bogenrechen ausgebildet ist, sowie mit einem Wasserantrieb für den Bogenrechen,
- Figur 2: eine schematische Darstellung eines Details der Rechenvorrichtung zur Veranschaulichung der Durchströmung des Spaltes zwischen zwei benachbarten Rechenstäben der Rechenvorrichtung,
- Figur 3: eine schematische Darstellung eines Details der in Figur 1 beschriebenen Rechenvorrichtung zur Verdeutlichung der Anordnung und Gestaltung eines Abstreifers der Einrichtung zur Räumung des Rechenguts,
- Figur 4: in einer schematischen Darstellung ein Schnitt durch eine Rechenvorrichtung, die als Flachrechen ausgebildet ist,
- Figur 5: in einer schematischen Darstellung ein Schnitt durch die in Figur 4 gezeigte Rechenvorrichtung, senkrecht zur Schnittführung gemäß Figur 4, mit Antrieb der Rechenvorrichtung,
- Figur 6: eine schematische Darstellung eines Details der Rechenvorrichtung nach den Figuren 4 und 5 zur Verdeutlichung der Durchströmung des Spaltes zwischen benachbarten Rechenstäben,
- Figur 7: in einer schematischen Darstellung ein Detail der Rechenvorrichtung, zur Verdeutlichung der Lagerung des jeweiligen Rechenstabendes in einem Rahmen der Rechenvorrichtung,
- Figur 8 bis 10: in schematischen Darstellungen grundsätzliche unterschiedliche Gestaltungen des jeweiligen Rechenstabes des in den Figuren 4 bis 7 erörterten Flachrechens,
- Figur 11: in einer schematischen Darstellung die Ausbildung des jeweiligen Abstreifers beim Flachrechen mit zusätzlich veranschaulichter Umströmung des Abstreifers im Betrieb der Rechenvorrichtung,
- Figur 12: eine konkrete Gestaltung einer als Bogenrechen ausgebildeten Rechenvorrichtung in einem Schnitt parallel zum jeweiligen Rechenstab,
- Figur 13: in einer Draufsicht eine Platte aus Edelstahl mit dem Schnittbild der Vielzahl aus dieser herauszuschneidender Rechenstäbe zur Verwendung bei der Rechenvorrichtung gemäß Figur 12,
- Figur 14: einen Schnitt gemäß der Linie A-A in Figur 12,
- Figur 15: eine vergrößerte Darstellung des bei der Vorrichtung gemäß der Figuren 12 und 14 jeweils Verwendung findenden Abstreifers sowie dessen Lagerung und dessen Anordnung bezüglich der Rechenstäbe, veranschaulicht in der in Figur 12 gezeigten Mittelposition,
- Figur 16: die Anordnung gemäß Figur 15, veranschaulicht in der linken Endposition des Abstreifers im Bereich der Trägerplatte,
- Figur 17: ein gegenüber der Anordnung eines Abstreifers gemäß Figur 16 modifizierte Anordnung des Abstreifers, der näher zum Schwenkmittelpunkt des Abstreifers angeordnet ist,
- Figur 18: die Anordnung gemäß Figur 17, bei maximal in Richtung des Schwenkmittelpunktes des Abstreifers positioniertem Abstreifer,
- Figur 19: eine Darstellung gemäß Figur 15, veranschaulicht für einen modifiziert gestalteten Abstreifer,
- Figur 20: eine Darstellung gemäß Figur 16 für den modifizierten Abstreifer nach Figur 19,
- Figur 21: den Abstreifer gemäß der Ausführungsform nach den Figuren 19 und 20, in einer Stellung gemäß Figur 19 veranschaulicht, jedoch näher zum Schwenkmittelpunkt des Abstreifers angeordnet,
- Figur 22: in einer Anordnung gemäß Figur 21 ein weiter modifizierter Abstreifer,
- Figuren 23, 24: die Anordnung gemäß Figur 22, bei weiter entfernt bzw. maximal entfernt vom Schwenkmittelpunkt des Abstreifers angeordnetem Abstreifer,
- Figur 25: in einer Anordnung gemäß der Figur 23 ein weiter modifizierter Abstreifer,
- Figur 26: in einer Anordnung gemäß Figur 21 ein dem dort gezeigten Abstreifer entsprechender Abstreifer, mit dem Abstreifer in beiden Verfahrrichtungen des Abstreifers zugeordneten Bürsten zum Säubern der Spalte zwischen den gebogenen Rechenstäben auf der Reinwasserseite,
- Figur 27: eine konkrete Ausführungsform eines Flachrechens, veranschaulicht bei in Mittelstellung befindlichen Abstreifern,
- Figur 28: den Flachrechen gemäß Figur 27, verdeutlicht in der, bezogen auf die Darstellung dieser Figur, linken Endstellung der Abstreifer benachbart der Trägerplatten der Rechenvorrichtung,
- Figur 29: die Anordnung des Abstreifers, dessen Lagerung und dessen Anordnung bezüglich der Rechenstäbe für die Mittelposition des Abstreifers gemäß 27,
- Figur 30: eine Anordnung gemäß Figur 29 für die in Figur 28 gezeigte Endposition des Abstreifers,
- Figur 31: für die Anordnung gemäß Figur 27, die dort Verwendung findenden Bürsten zum Säubern der Spalte, und
- Figur 32: die Anordnung gemäß Figur 31 im Bereich der Bürsten, in vergrößerter Darstellung.

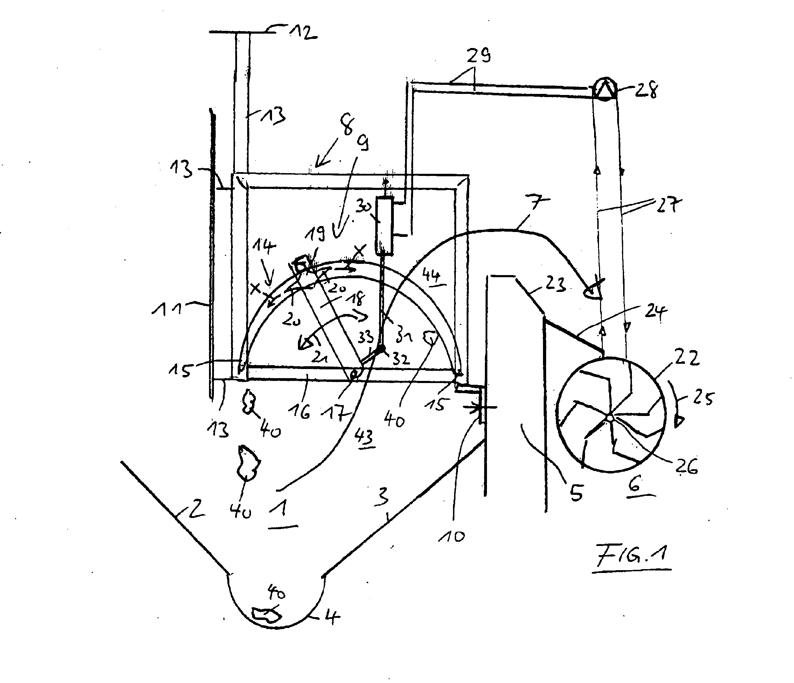

Figur 1 veranschaulicht einen Abwasserkanal 1 mit geneigten, sich aufeinander zu erstreckenden Bodenabschnitten 2 und 3 sowie einer die beiden Bodenabschnitte 2 und 3 im Bereich deren unteren Enden verbindenden Trockenwetterrinne 4. Seitlich wird der Abwasserkanal 1 im Bereich des Bodenabschnitts 3 durch eine sich wesentlich über das Niveau des Bodenabschnitts 3 hinaus erstreckende, vertikal angeordnete Überfallwand 5 begrenzt. Bei Betreiben der Kanalisation im Misch- oder Trennsystem kann, wenn erhöhte Abwasservolumenströme anfallen, ein Teil des Abwassers die Überfallwand 5 überströmen und gelangt von dort in einen neben der Überfallwand 5 befindlichen Entlastungskanal 6 und von dort in ein Gewässer/Vorfluter. Die mit einem Pfeil versehene Linie 7 verdeutlicht den Weg der Strömung ausgehend vom Abwasserkanal 1 in den Entlastungskanal 6 bei erhöhtem Abwasseranfall, insbesondere bei einem Regenereignis. Insbesondere bei Regen gelangen dann, wenn keine Rechenvorrichtung vorgesehen ist, erhebliche Mengen an Verschmutzungen wie z.B. Hygieneartikel, Papier und Kunststoffe in den Vorfluter/das Gewässer.

Oberhalb des Abwasserkanals 1 ist ein sich im Wesentlichen in der Länge des Abwasserkanals 1 erstreckender Rahmen 8 angeordnet, der der Aufnahme einer Rechenvorrichtung 9 dient. Der Rahmen 8 ist einerseits über Befestigungswinkel 10 mit der Überfallwand 5 auf der dem Abwasserkanal 1 zugewandten Seite und andererseits mit einer Kanalwand 11 und/oder einer Kanaldecke 12 mittels Streben 13 verbunden. Die mit dem Rahmen 8 verbundene Rechenvorrichtung 9 ist als Rundrechen ausgebildet, mit einer Vielzahl, bezogen auf die Blattebene der Figur 1 hintereinander angeordneter, identischer, im Wesentlichen halbkreisförmig gebogen gestalteter Rechenstäbe 14, wobei benachbarte Rechenstäbe einen Abstand von 4 bis 6 mm aufweisen und die beiden freien Ende 15 des jeweiligen Rechenstabs 14 nach unten gerichtet sind. Die Enden 15 sind mit dem Rahmen im Bereich einer unteren, horizontal angeordneten Strebe 16 verbunden. Der jeweilige Rechenstab ist somit auf der dem Kanal zugewandten Abwasserseite nach innen gewölbt und auf der dem Kanal abgewandten Seite, somit der Reinwasserseite, nach außen gewölbt ausgebildet. Der jeweilige Rechenstab erstreckt sich über einen Winkel von 180°, es sind aber auch kleinere Winkel denkbar, beispielsweise Winkel von 90 bis 120°, insbesondere ein Winkel von 90° oder ein Winkel von 120°.

Der jeweilige Rechenstab weist auf der Abwasserseite eine geringe Krümmung als auf der Reinwasserseite auf.

Im Bereich der halben Länge der Rahmenstrebe 16 ist in dieser, um eine Achse 17 frei schwenkbar, ein plattenförmiger Hebel 18 gelagert, wobei die großflächige Seite des Hebels 18 parallel zur großflächigen Seite des jeweiligen plattenförmigen Rechenstabes 14 und senkrecht zur Längserstreckung der Achse 17 angeordnet ist. Der Hebel 18 ist im Rahmen 8 auf einer halbkreisförmigen Bahn geführt und nimmt, zwischen benachbarten Streben 13 angeordnet, einen Abstreifer 19 auf. Die Verfahrrichtung X bzw. Bewegungsrichtung X des jeweiligen Abstreifers 19 ist somit bidirektional entlang der halbkreisförmigen Bahn. Jeder Abstreifer 19 weist in seiner Bewegungsrichtung X und seiner entgegengesetzten Bewegungsrichtung X zwei sich in Richtung der Halbkreisbahn erstreckende Vorsprünge 20 bzw. Enden 20 auf, die konisch zulaufend ausgebildet sind. Der jeweilige Abstreifer 19 ist im Wesentlichen zwischen den benachbarten Rechenstäben 15 angeordnet. Ein radialer, der Reinwasserseite zugewandter Abschnitt des Abstreifers dient der Lagerung des Abstreifers in einem mit dem Hebel 18 verbundenen Halter. Insofern erstreckt sich der Abstreifer radial über die reinwasserseitige Begrenzung der Stäbe. Der Abstreifer weist auf seiner radial inneren Seite, somit auf seiner Abwasserseite, zwischen den beiden Vorsprüngen 20 einen erhöhten Bereich auf, der sich über die abwasserseitige Kontur der Rechenstäbe 14 erstreckt. Die Vorsprünge 20 befinden sich zwischen den benachbarten Rechenstäben. Aufgrund der Formgestaltung des jeweiligen Vorsprungs 20 wird durch den, bezogen auf die Bewegungsrichtung des Abstreifers vorlaufenden Vorsprung 20 Rechengut entweder zur Abwasserseite der Rechenstäbe oder zur Reinwasserseite der Rechenstäbe gefördert, je nachdem auf welche Abstreiferkontur des Rechengut trifft.

Fällt ein überaus großer Abwasservolumenstrom an, mit der Konsequenz, dass Abwasser über die Überfallwand 5 tritt, werden im Abwasser mitgeschleppte Verschmutzungen, die mit der Bezugsziffer 40 bezeichnet sind, wie z.B. Hygieneartikel, Papier und Kunststoffe, beim Durchtritt des Abwassers durch die Rechenvorrichtung von unten nach oben von den Rechenstäben 14 zurückgehalten. Mittels der in den Richtungen des Doppelpfeils 21 hin und her verschwenkbaren Hebel 18 und der mit diesen verbundenen Abstreifer 19 wird das Rechengut geräumt. Die Hebel 18 werden so weit verschwenkt, dass die Abstreifer 19 das Rechengut bis zu den Enden 15 der Rechenstäbe 14 austragen. Der Kreisbogenmittelpunkt der reinwasserseitigen Stirnfläche 49 des jeweiligen Rechenstabes 14 entspricht dem des jeweiligen entlang des Kreisbogens verfahrbaren Abstreifers 19.

Angetrieben werden die Hebel 18 mit den Abstreifern 19 mittels eines Wasserrades 22. Es existiert somit ein fremdenergiefreier Antrieb, wobei das Wasserrad 22 in Strömungsrichtung des Abwassers hinter der Übenfallwand 5 angeordnet ist. Das Abwasser gelangt, wie der Pfeillinie 7 zu entnehmen ist, hinter der mit einer Schräge 23 versehenen Überfallwand 5 auf ein im unteren Bereich der Schräge 23 mit der Überfallwand 5 verbundenes schräg angeordnetes Ableitblech 24 und von dort oben auf das Wasserrad 22, das im Uhrzeigersinn gemäß Pfeilrichtung 25 rotiert. Das Wasserrad 22 treibt über seine Wasserradwelle 26 zunächst einen Riemen 27 an, und über diesen eine Pumpe 28, insbesondere eine Hydraulikpumpe. Diese Pumpe 28 ist über Druckleitungen 29 mit einem im Rahmen 8 gelagerten Kolben 30 verbunden, dessen Kolbenstange 31 über ein im Abstand zur Achse 17 angeordnetes Gelenk 32 mit einem Ansatz 33 verbunden ist, wobei dieser Ansatz 33 mit allen Rechenstäben verbunden ist. Nicht gezeigt ist die Steuerung der Hydraulik, die bewirkt, dass beim Erreichen der Endstellung der Abstreifer benachbart des einen Endes 15 der Rechenstäbe 14 die Schwenkbewegung der Hebel 18 in Richtung des anderen Endes 15 der Rechenstäbe 14 umsteuert, womit eine kontinuierliche Reinigungswirkung des Rechens gewährleistet ist.

Bei der in Figur 1 veranschaulichten Ausführungsform sind die Mittel, die die Bewegung des Wasserrades 22 auf die Hebel 17 und die Abstreifer 19 übertragen, außerhalb der Überfallwand 5 angeordnet und befinden sich insbesondere oberhalb des maximalen Flüssigkeitsniveaus.

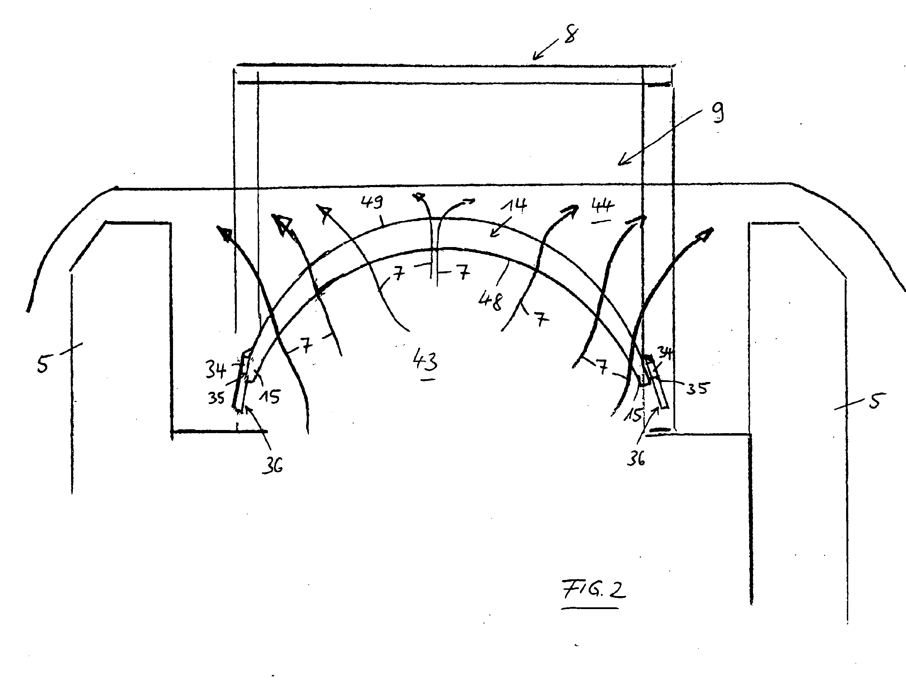

Figur 2 veranschaulicht eine gegenüber der Darstellung nach Figur 1 modifizierte Variante des Kanalbauwerks, bei der die Rechenvorrichtung 9 zwischen zwei parallel zueinander angeordneten Überfallwänden 5 angeordnet ist. Hierbei ergibt sich bei einem Überlauf eine Durchströmung der Rechenvorrichtung 9, die der Einfachheit halber ohne Rechengutabstreifer veranschaulicht ist, gemäß der Darstellung der Strömungspfeile 7. Der Darstellung ist zu entnehmen, dass im Bereich des Scheitels des Rechenstabes 14 die Strömungsrichtung 7 radial ist, während die Strömungsrichtung 7 benachbart der Enden 7 der Rechenstäbe 14 nicht radial, sondern auf kürzestem Wege durch den Spalt zwischen benachbarten Rechenstäben 14 erfolgt, somit schräg. Da sich die Rechenstäbe zum Ende hin verjüngen, ist der Strömungsweg im Spalt zwischen benachbarten Rechenstäben 14 von der Mitte des Rechenstabes 14 zu seinem Ende 15 hin etwa gleich. Der jeweilige sich von seiner Mitte, somit seiner Symmetrieachse zum Ende 15 hin verjüngende Rechenstab 14 wird demnach zum Ende 15 hin flacher. Der Rechenstab ist vorzugsweise aus einer Platte hergestellt, weist somit eine identische Stärke auf. Der jeweilige Rechenstab weist auf der Abwasserseite eine geringere Krümmung als auf der Reinwasserseite auf. Im Ausführungsbeispiel gemäß den Figuren 1 und 2 besitzen die Außenkonturen des Rechenstabes 14 Kreisform, konkret der jeweilige gebogene Rechenstab 14 so gestaltet, dass er auf der Abwasserseite einen größeren Radius als auf der Reinwasserseite besitzt. An den Enden 15 des jeweiligen Rechenstabes 14 ist ein Aufsatz 34 (Vater-Stück), insbesondere von mehreren mm Höhe und Breite vorgesehen, der in eine Ausklinkung 35 (Mutter-Stück) eines·Querträgers 36 des Rahmens 8 eingesteckt und dort zwecks dauerhaftem Verbinden von Rechenstab 14 und Querträger 36 verschweißt wird.

Bei der beschriebenen Ausführungsform sind die Rechenstäbe 14 somit zur Durchflusssteigerung bei gleicher Grundfläche nach unten gebogen. Der Fließwiderstand ist nahezu überall gleich, da am Stabende 15 eine schräge Strömung herrscht, der Stab flacher ist und damit einen Wegausgleich bietet. Es herrscht somit ungefähr der gleiche Widerstand bei Durchströmung zwischen den Rechenstäben 14.

Der gezeigte Rundrechen ist auf Zug ausgelegt, so dass die Rechenstäbe 14 grundsätzlich flacher ausfallen können. Hierdurch ergibt sich eine höhere hydraulische Leistung wegen der geringeren Widerstände zwischen benachbarten Rechenstäben 14. Die flacheren Rechenstäbe benötigen wesentlich weniger Material zur Herstellung.

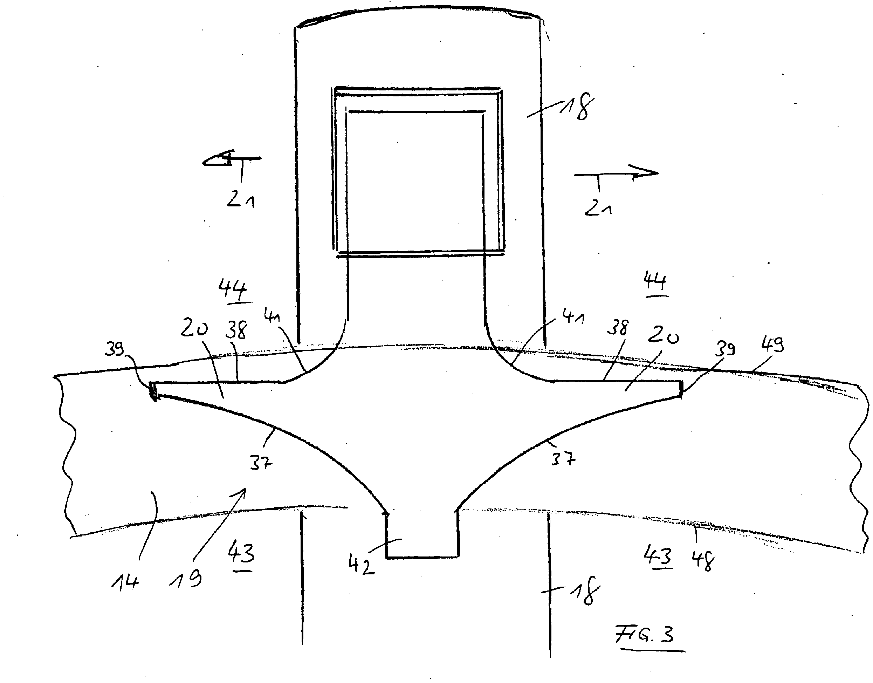

Figur 3 verdeutlicht eine grundsätzliche Gestaltung des bei der Rechenvorrichtung 9 zwischen benachbarten Rechenstäben 14 Verwendung findenden Rechengutabstreifers 19. Dieser ist als plattenförmiges Bauteil, beispielsweise als Kunststoffbauteil aus Polyethylen ausgebildet. Der Abstreifer 19 ist im Hebel 18 gelagert. Bei dem beschriebenen Ausführungsbeispiel sind die Vorsprünge 20 des Abstreifers konisch zulaufend gestaltet, wobei der Abstreifer auf seiner Abwasserseite eine nach innen gewölbte Oberfläche 37 des Vorsprungs 20, die sich zwischen benachbarten Rechenstäben 14 befindet und eine sich gleichfalls zwischen benachbarten Rechenstäben 14 befindliche reinwasserseitige Stirnfläche 38 aufweist, die im Wesentlichen gerade gestaltet ist und weitgehend in Tangentialrichtung des Rechenstabes 14 verläuft. An den dem freien stumpfen Ende 39 des Abstreifers 19 abgewandten Bereich der Stirnfläche 38 schließt sich an diesen ein nach innen gekrümmter Stirnflächenabschnitt 41 des Vorsprungs 20 an, der in seinem Endbereich im Wesentlichen nach radial außen gerichtet ist. Radial innen verbindet die beiden Stirnflächen 18 ein Vorsprung 42 mit im Wesentlichen rechteckigem Querschnitt. Diese grundsätzliche Gestaltung gewährleistet, dass beim Verfahren des jeweiligen Rechengutabstreifers 19 in Pfeilrichtung 21 Rechengut, das sich auf der Abwasserseite 43 der Rechenvorrichtung und gegebenenfalls zwischen den Rechenstäben 14 gesammelt hat, schonend und auf kurzem Wege aus dem Spalt zwischen benachbarten Rechenstäben 14 durch Kontakt mit der Stirnfläche 37 nach unten herausgeschält und zum Querträger 36 transportiert wird. Im Bereich des jeweiligen Querträgers 36 ist eine strömungsberuhigte Zone, somit eine Ruhezone, gebildet. Das dort gesammelte Rechengut sammelt sich dort an und kann nach unten absinken, um dort aus dem Kanal ausgetragen zu werden. Der Stirnfläche 38 und dem Stirnflächenabschnitt 41 hingegen kommt bei einer Bewegung des Rechengutabstreifers 19 die Aufgabe zu, Stoffe, die sich im oberen Bereich der Rechenstäbe 14 zwischen diesen festgesetzt haben, aus dem zwischen den Rechenstäben 14 gebildeten Spalt zu fördern. Das Gut wird im Bereich der Stirnfläche 38 aufgenommen und über den gekrümmten Stirnflächenabschnitt 41 beim Bewegen des Abstreifers 19 nach oben aus dem zwischen den Rechenstäben 14 gebildeten Spalt herausgedrückt.

Wegen der diversen vorteilhaften unterschiedlichen Gestaltungen des jeweiligen Abstreifers der Rechenvorrichtung wird auf die späteren Ausführungen verwiesen.

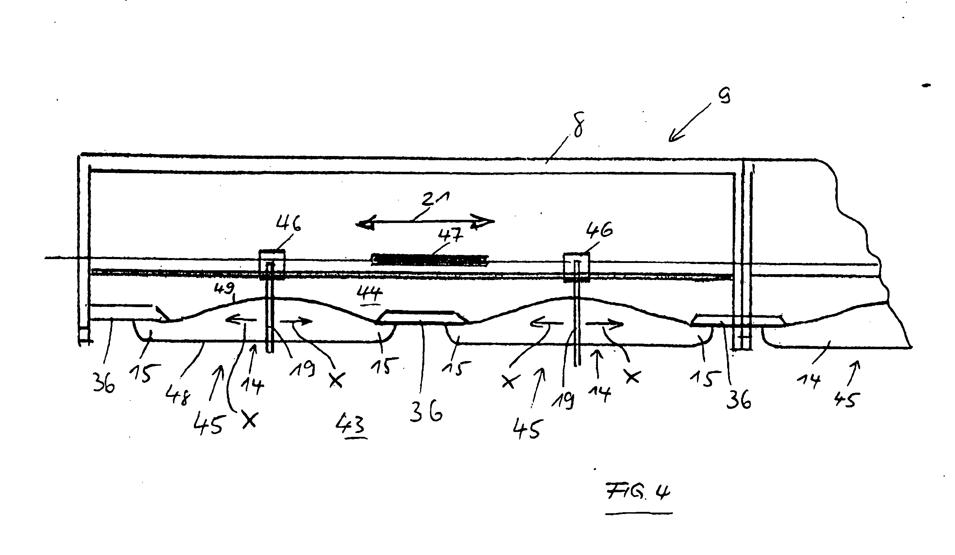

Im Gegensatz zu den Darstellungen der Figuren 1 bis 3, die die schematischen Darstellungen beim Bogenrechen betreffen, zeigen die Figuren 4 bis 11 schematische Darstellungen bei der als Flachrechen ausgebildeten Rechenvorrichtung 9:

Dieser Flachrechen findet beispielsweise bei einem Kanalbauwerk Verwendung, wie es zum Rundrechen beschrieben ist und es wird der Flachrechen gleichfalls mittels eines Wasserrades 22 angetrieben.

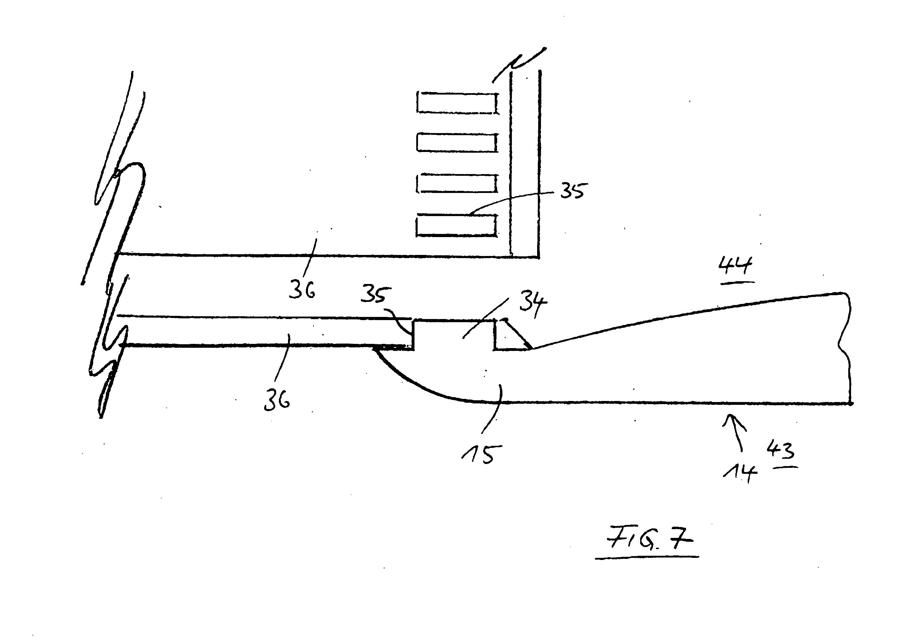

Figur 4 veranschaulicht eine Anordnung von modular aufgebauten Rechenvorrichtungen, wobei ein Modul vollständig und das an dieses Modul angrenzende Modul nur im angrenzenden Bereich gezeigt ist. Jedes Modul besitzt zwei Reihen 45 von Rechenstäben 14, wobei die Rechenstäbe der jeweiligen Reihe 45, bezogen auf die Orientierung der Blattebene gemäß Figur 4, hintereinander angeordnet sind. Der jeweilige Rechenstab 14 ist; genauso wie der Rechenstab des Bogenrechens, zum jeweiligen Ende 15 hin flacher werdend gestaltet. Das jeweilige Ende 15 ist mit dem beschriebenen Aufsatz 34 und der Bestandteil des Rahmens 8 bildende Querträger 36 mit der Ausklinkung 35 versehen, wie es in Figur 7 für die Seitenansicht von Querträger 36 und Rechenstab 14 sowie die Draufsicht des Querträgers veranschaulicht ist.

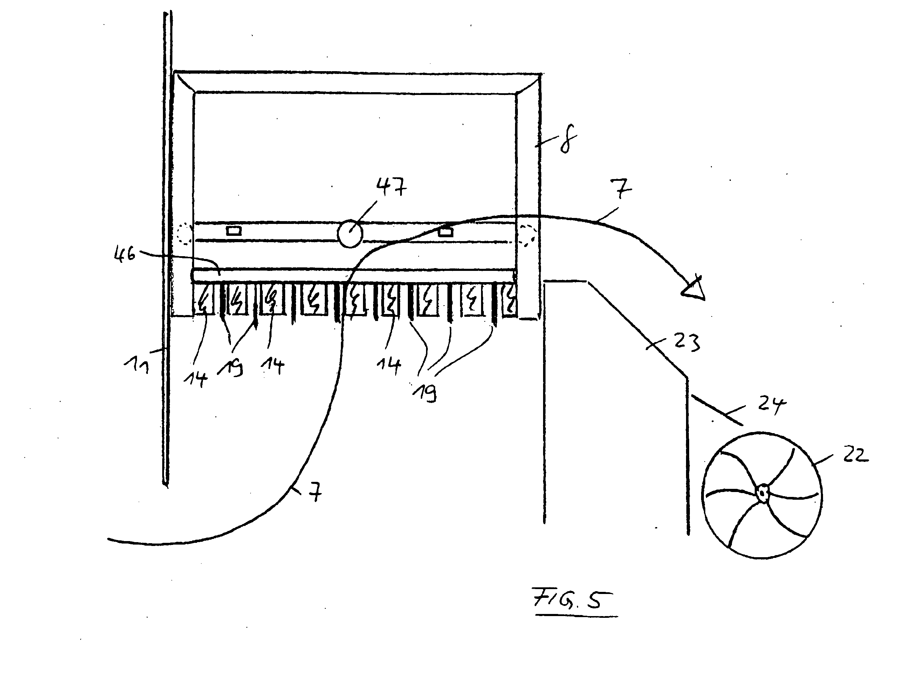

Bezogen auf die jeweilige Reihe 45 von Rechenstäben 14 ist zwischen benachbarten Rechenstäben 14 ein in den Figuren 4 und 5 stark vereinfacht dargestellter Abstreifer 19 angeordnet. Die Abstreifer 19, die auf der Abwasserseite 13 geringfügig über die Rechenstäbe 14 hinausstehen, sind auf der Reinwasserseite 44 in Schlitten 46 gelagert, die im Rahmen 8 gelagert sind. Die Schlitten 46 sind mittels eines gleichfalls im Rahmen 8 gelagerten Antriebs 47 verfahrbar, der mittels des zur Bogenrechenausführungsform beschriebenen Wasserrades 22 angetrieben wird. Hierdurch ergibt sich die Verfahr- bzw. Bewegungsrichtung X der Abstreifer 19.

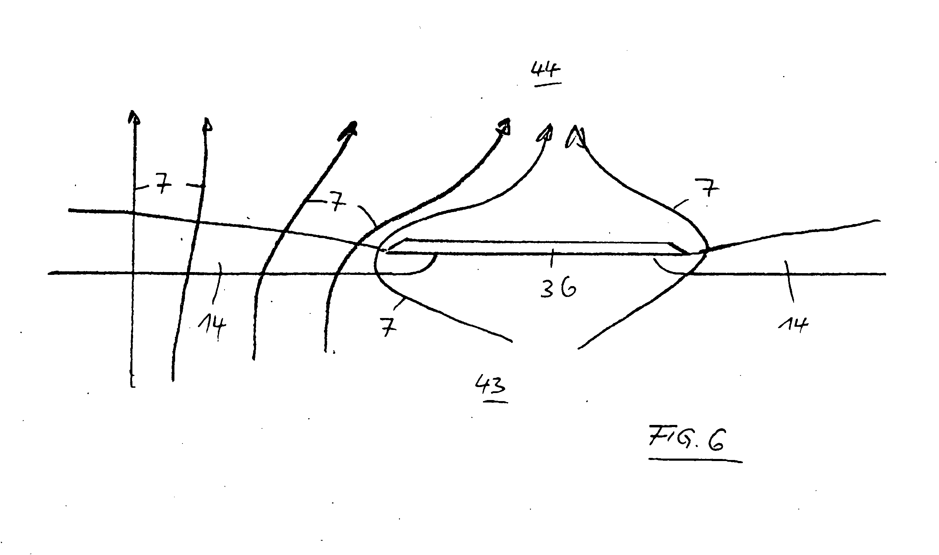

Figur 6 veranschaulicht die Durchströmung der Rechenstäbe 14 im Bereich benachbarter Reihen 45 und die Ausbildung der Ruhezone im Bereich des die beiden Rechenstabreihen verbindenden Querträgers 36. Entsprechend der Darstellung der Figur 2 ist der Figur 6 zu entnehmen, dass aufgrund der Formung des jeweiligen Rechenstabes ungefähr der gleiche Widerstand bei Durchströmung zwischen den Stäben besteht. Der Fließwiderstand ist im Spalt zwischen benachbarten Stäben nahezu überall gleich, da am Stabende schräge Strömung herrscht, der Stab dort flacher ist und damit einen Wegausgleich bietet.

Die Figuren 4, 8, 9 und 10 verdeutlichen unterschiedliche Gestaltungen des jeweiligen Rechenstabes 14. Allen Gestaltungen ist gemeinsam, dass sich der Stab zum Ende 15 hin verjüngt, somit flacher wird. Bei der Ausführungsform nach der Figur 4 ist der jeweilige Stab 14 symmetrisch gestaltet, mit einer der Abwasserseite 43 zugewandten Stirnfläche 48, die horizontal angeordnet ist und einer der Reinwasserseite 44 zugewandten Stirnfläche 49, die zwischen den Enden 15 konvex ist.

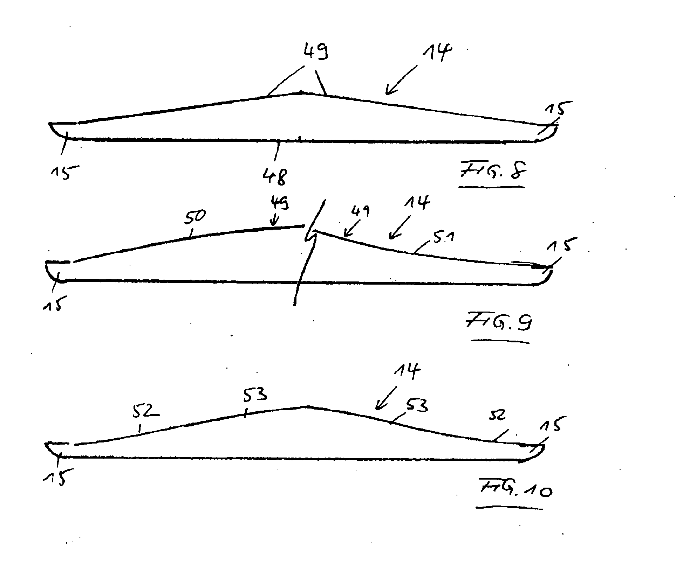

Der Rechenstab 14 gemäß der Ausführungsform nach Figur 8 weist eine entsprechend der Ausführungsform nach Figur 4 ausgebildete Stirnfläche 48 auf, und es ist im Unterschied die Stirnfläche 49 als von den Enden linear steigendes Dach ausgebildet.

Die Ausführungsform nach der Figur 9 unterscheidet sich von der nach der Figur 8 dadurch, dass die Stirnfläche 49 durch einen nach innen gewölbten Abschnitt 50 und einen nach außen gewölbten Abschnitt 51 gebildet ist. Die Ausführungsform nach der Figur 10 unterscheidet sich von der nach der Figur 9 dadurch, dass die Stirnfläche 49 durch sich an den Enden anschließende nach innen gewölbten Abschnitte 52 und zwischen diesen angeordnete, nach außen gewölbte Abschnitte 43 gebildet ist.

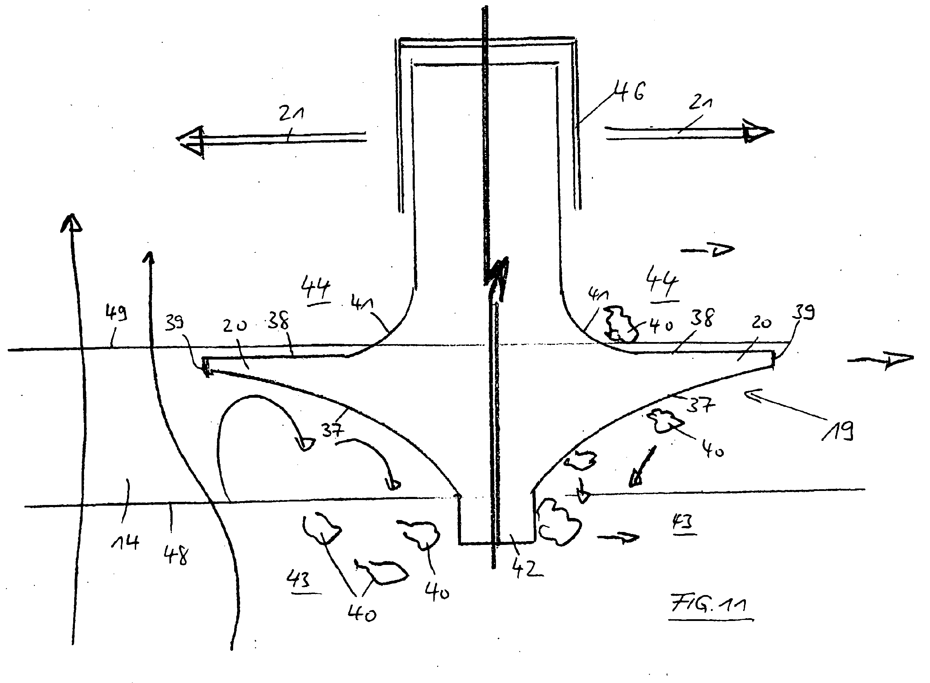

Figur 11 veranschaulicht im Detail die Ausgestaltung des bei dem beschriebenen Flachrechen Verwendung findenden Rechengutabstreifers 19 und dessen Lagerung im Schlitten 46 sowie dessen Anordnung bezüglich des jeweiligen Rechenstabes 14. Die Gestaltung des Abstreifers 19 entspricht derjenigen, die in Figur 3 betreffend den Rundrechen beschrieben ist. Ergänzend sind in der Figur 11 die Strömungsverhältnisse im Bereich des Abstreifers 19 bei dessen Bewegung veranschaulicht. Der Strömungsdruck wird im Bereich der langen Enden 20 des Abstreifers reduziert und das Rechengut 40 angehoben.

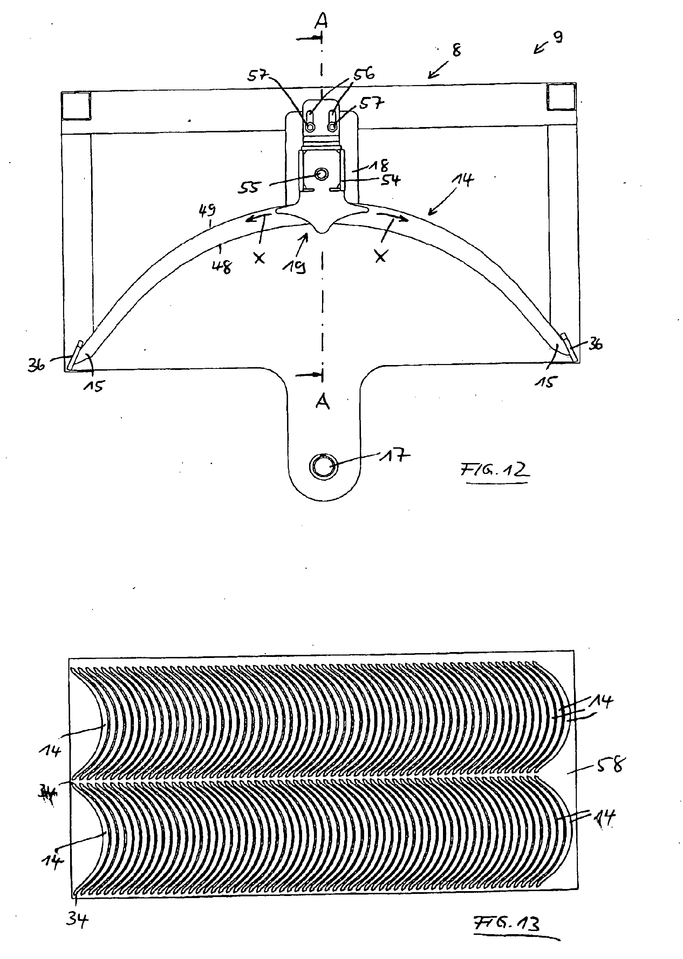

Die Figuren 12 bis 32 veranschaulichen konstruktiv ausgeführte Rechenvorrichtungen 9 betreffend Bogenrechen und Flachrechen. Zur Vermeidung von Wiederholungen sind mit den bislang beschriebenen Ausführungsformen in Aufbau oder Funktionsweise übereinstimmende Teile mit denselben Bezugsziffern bezeichnet. Insofern wird auf die vorstehende Beschreibung verwiesen.

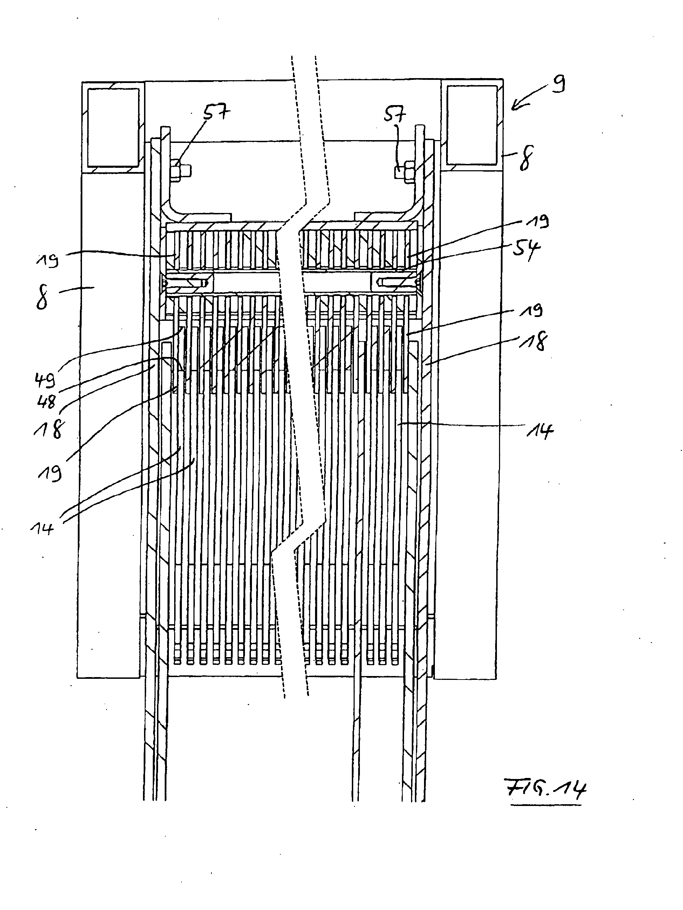

Der in den Figuren 12 und 14 bis 18 beschriebene Rundrechen 9 weist die diversen parallel zueinander angeordneten plattenförmigen Abstreifer 19 auf, die hintereinander in eine Aufnahme 54, die mit dem Hebel 18 verbunden ist, gesteckt sind. Die Abstreifer 19 weisen Löcher auf, durch die ein Stab 55 gesteckt ist, der in der Aufnahme 54 gehalten ist. Auf diese Art und Weise sind die Abstreifer 19 mit einem geringfügigen Spiel gelagert und können so Toleranzen im Spalt zwischen benachbarten Rechenstäben 24 beim Bewegen des Abstreifers in tangentialer Richtung des Spaltes ausgleichen. Die Aufnahme 54 ist mit dem Hebel 18 verschraubt. Hierbei sind Langlöcher 56 vorgesehen, zum radialen Einstellen der Abstreifer 19, somit in Richtung der Achse 17 und entgegengesetzt, bei gelösten Schrauben/Muttern 57. Figur 14 zeigt in vergrößerter Darstellung den Aufbau der Rechenvorrichtung 9.

Figur 13 veranschaulicht den Schnittplan für das Schneiden einer Vielzahl von Rechenstäben 14 aus einer Edelstahlplatte, die beispielsweise Abmessungen von 1,5 x 3,0 m besitzt. Veranschaulicht ist, dass bei Ausbildung des Rechenstabs 14 als Bogensegment, das sich über einen Winkel von 120° erstreckt, bei minimalem Abfall eine Vielzahl, konkret 124 Rechenstäbe, einschließlich gestalteter Enden 15 mit den Aufsätzen 34 schneiden lassen. Beim Laserschneiden der Rechenstäbe 14 ist es bei dieser Anordnung nur erforderlich, die Platte 58 einmal aufzulegen. Sie wird komplett gelasert. Dies ergibt eine große Wirtschaftlichkeit bei der Herstellung der Rechenstäbe 14.

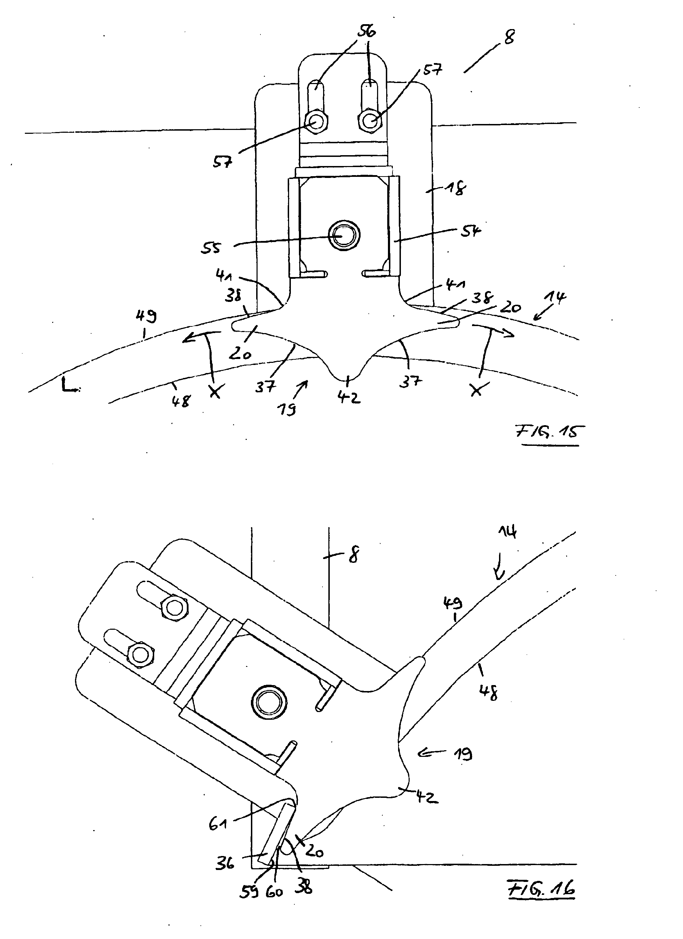

Figur 15 veranschaulicht den Abstreifer 19 in seiner Anordnung gemäß Figur 12, somit im Bereich der Symmetrieachse des jeweiligen Rechenstabs 14 und damit oberhalb der Achse 17, während die Figur 16 diesen Abstreifer 19 im Bereich des linken Querträgers zeigt. Der Figur 16 ist zu entnehmen, dass in der Endstellung des Abstreifers 19 die Stirnfläche 38 des Abstreifers 19 die dieser zugewandte Fläche 59 des Querträgers 36, die als Ablagefläche bezeichnet ist, mit Abstand hintergreift. Es ist somit zwischen der Stirnfläche 38 und der Ablagefläche 59 ein Spalt 60 gebildet. Aufgrund der im Unterschied zu den vorbeschriebenen Ausführungsformen nicht parallelen Anordnung der Stirnfläche 38 zur Tangentialrichtung des Abstreifers 19 ergibt sich dieser Spalt 60. Auf der Ablagefläche 59 angesammeltes Rechengut wird somit, da die Stirnfläche 38 die Ablagefläche 59 nicht flächig kontaktiert, sondern allenfalls eine Linienberührung im Bereich der Linie 61 zwischen Abstreifer 19 und Querträger 36 möglich ist, nicht kompaktiert, sondern es schiebt der Abstreifer bei dessen Bewegungen in Tangentialrichtung des Rechenstabs 14 das Rechengut im Bereich des Querträgers 26 von diesem, so dass das Rechengut nach unten absinken kann.

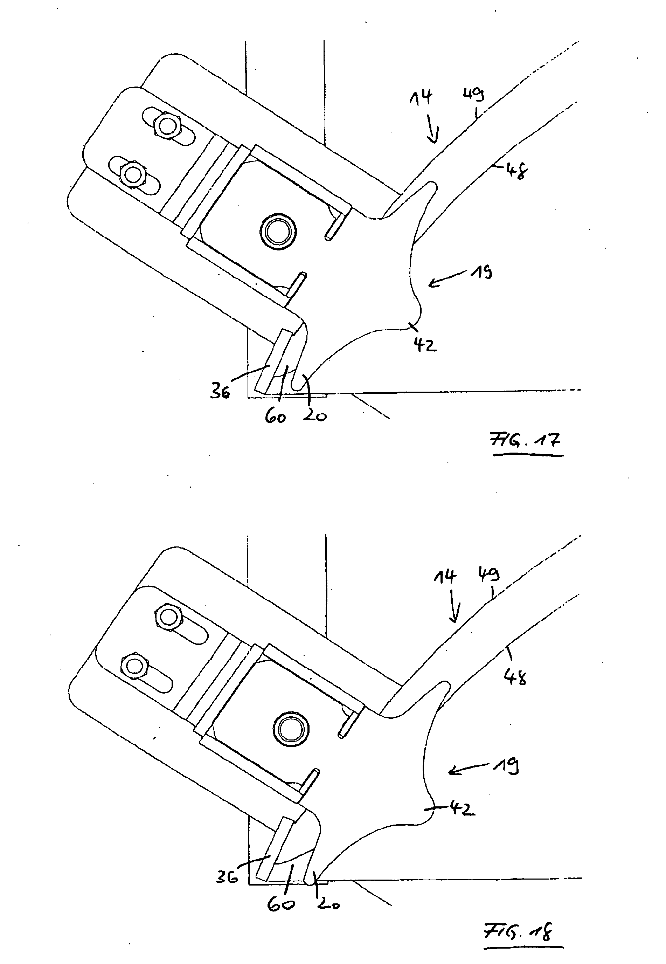

Die Figuren 17 und 18 verdeutlichen, dass sich aufgrund der beschriebenen Lagerung der Abstreifer 19 in der mit den Langlöchern 56 versehenen Aufnahme 54 der konisch zulaufende Spalt 60 in seiner Dicke verstellen lässt, wobei in Figur 17 ein breiterer Spalt 60 als in Figur 16 veranschaulicht, und in Figur 18 ein maximaler Spalt 60 gezeigt ist.

Der Ausführungsform nach den Figuren 15 und 16 ist zu entnehmen, dass die Vorsprünge 20 des jeweiligen Abstreifers 19 in der Mittelstellung gemäß Figur 15 zwischen benachbarten Rechenstäben 14 angeordnet sind. Die Bewegungsbahn des Abstreifers 19 kann um den Drehpunkt erfolgen, der der Kreismittelpunkt der äußeren Stirnfläche 49 des Rechenstabes 14 ist. Der Radius der inneren Stirnfläche 48 des Rechenstabes 14 ist vorzugsweise größer als der Radius der äußeren Stirnfläche 49 des Rechenstabs 14. Es ist auch denkbar, den Abstreifer entlang eines Kreisbogens zu bewegen, dessen Mittelpunkt der Kreismittelpunkt der inneren Stirnfläche 48 ist. Durch eine entsprechende Auswahl lässt sich das Eintauchen des Abstreifers 19 beim Bewegen zwischen dessen Endlagen und auch der Abstand zwischen der Stirnfläche 38 und der Ablagefläche 59 variieren.

Bei der Ausführungsform nach den Figuren 15 bis 18 wird der jeweilige Abstreifer 19 auf einem Kreisbogen bewegt, dessen Mittelpunkt der Mittelpunkt der Stirnfläche 49 ist.

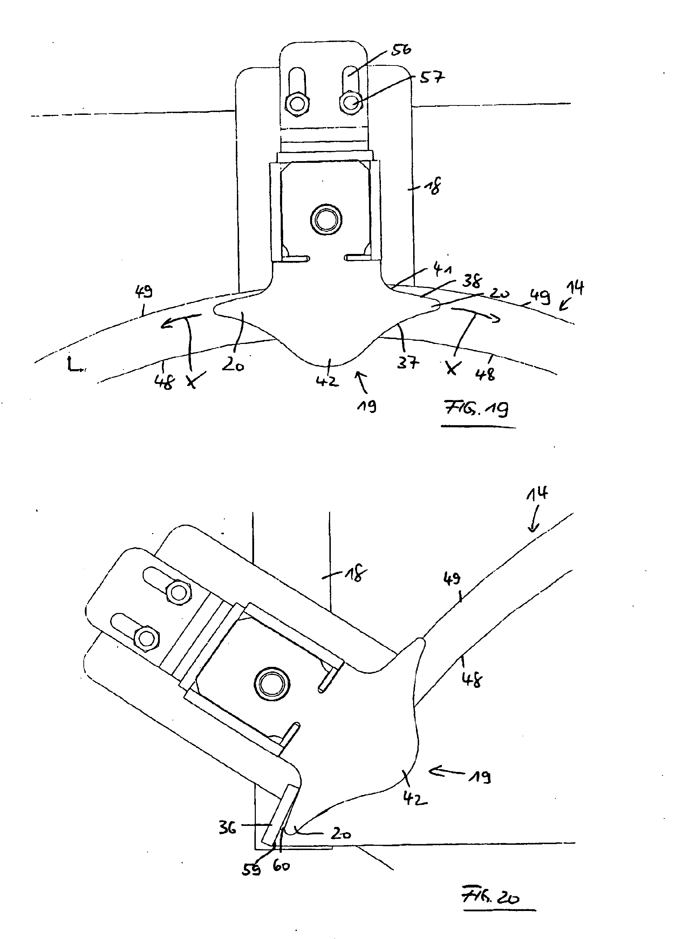

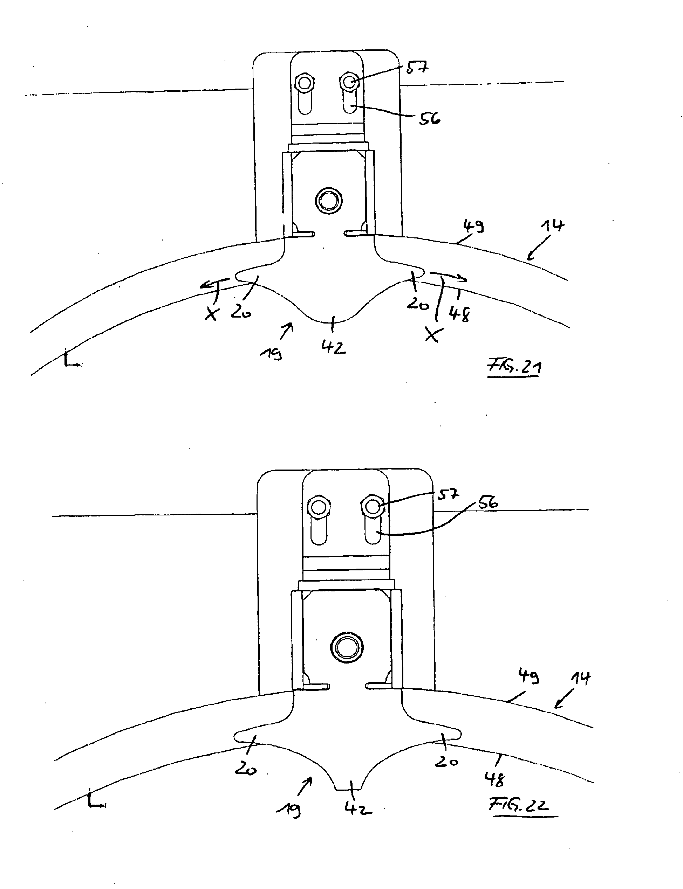

Die Figuren 19 bis 25 zeigen für geänderte Ausführungsformen entsprechende Zustände der Ausführungsform nach den Figuren 15 und 16. Bei der Ausführungsform nach den Figuren 19 und 20 ist der Ausheber, somit die Stirnfläche 37 nach innen gewölbt, im Unterschied zur nach außen gewölbten Stirnfläche 37 bei der Ausführungsform nach den Figuren 15 und 16, ferner ist bei der Ausführungsform nach den Figuren 19 und 20 der abgerundete Vorsprung 42 wesentlich stärker ausgebildet als bei der Ausführungsform nach den Figuren 15 und 16. Der Zustand gemäß Figur 21 zeigt einen gegenüber dem Zustand nach Figur 19 weiter radial nach innen verstellten Abstreifer 19, womit sich in der Endlage dieses Abstreifers ein gegenüber dem Spalt 60 nach Figur 20 vergrößerter Spalt ergibt.

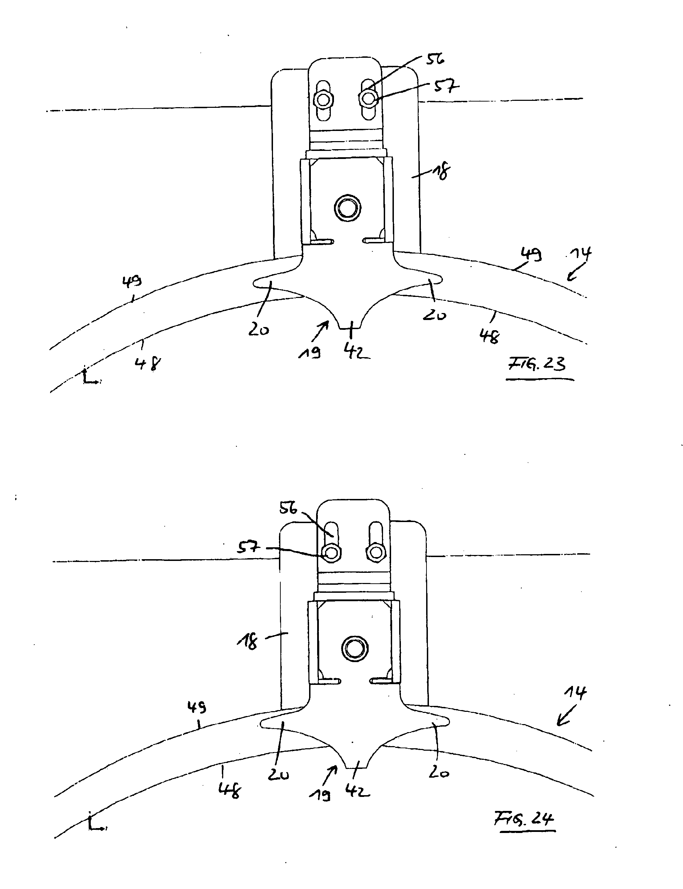

Figur 22 zeigt einen weiter modifizierten Abstreifer 19, bei dem der Vorsprung 42 unten gerade ist, sonst aber der Abstreifer 19 demjenigen gemäß der Figuren 15 und 16 entspricht. Der Abstreifer 9 ist bei der Ausführungsform nach der Figur 22 in seiner der Schwenkachse 17 benachbarten Endstellung gezeigt, in der die freien Enden der Vorsprünge 20 nach wie vor zwischen den benachbarten Rechenstäben 14 angeordnet sind und der Vorsprung 42 deutlich über die Stirnfläche 48 hinausragt. Figur 23 veranschaulicht den Abstreifer gemäß der Figur 22 in einer radialen Mittelstellung, in der der Vorsprung 42 weniger weit über die Stirnfläche 48 hinaussteht. Figur 24 zeigt den Abstreifer gemäß den Figuren 22 und 23 in der maximal radial nach außen angeordneten Position.

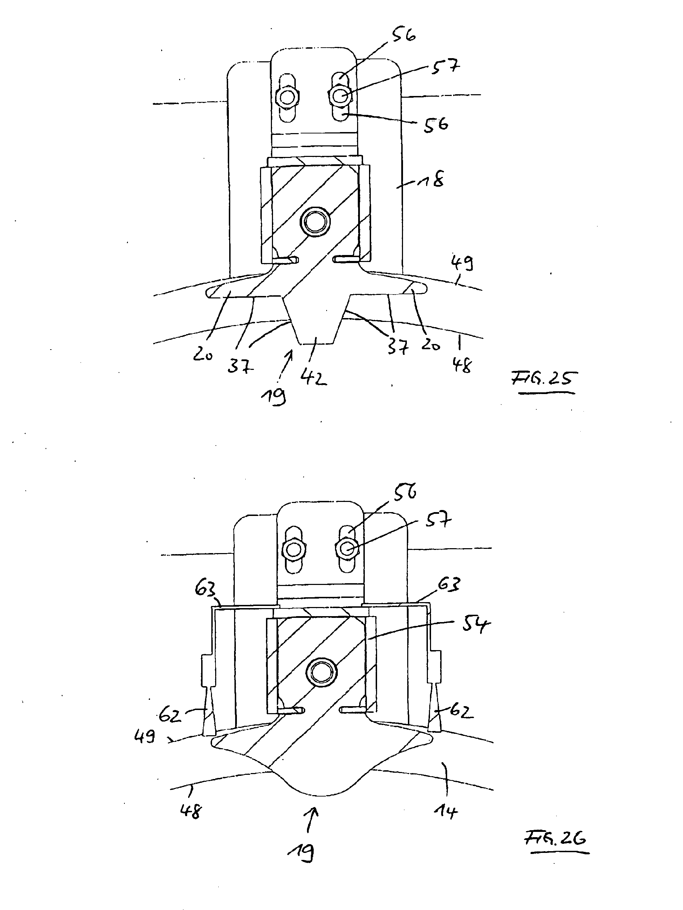

Bei der Ausführungsform nach der Figur 25 ist der Abstreifer 19 unten eckig geführt. Der Abstreifer ist im Bereich der unteren Begrenzung seiner Vorsprünge 20 mit abgeknickt angeordneten Stirnflächen 37 versehen. Zwischen diesen ist der Vorsprung 42 angeordnet.

Bei der Ausführungsform nach Figur 26 ist der Abstreifer 19 entsprecht dem nach der Ausführungsform gemäß der Figuren 19 und 20 ausgebildet. Allerdings sind in den Bewegungsrichtungen des Abstreifers 19, vor und hinter diesem, Bürsten 62 angeordnet, die in Haltern 63 gelagert sind, wobei die Halter 63 mit der Aufnahme 54 verbunden sind. Die Bürsten haben die Aufgabe, eventuelle Ablagerungen oder Steine, die oben auf den Rechenstäben 14 liegen bleiben, zur linken oder rechten Seite zu bürsten. Die Bürsten 62 ragen geringfügig von oben in den zwischen benachbarten Rechenstäben 14 gebildeten Spalt. Selbstverständlich können die Bürsten, wie auch die vorbeschriebenen Modifizierungen des Abstreifers 19, bei einem Flachrechen Verwendung finden. Die Bürsten führen praktisch eine Reinigung der Oberseite des Rechens durch. Der Träger, sei es beim Rundrechen der Hebel 18, oder beim Flachrechen der Schlitten 46, der die Abstreifer 19 hin und her bewegt, nimmt gleichfalls die Bürsten 62 auf.

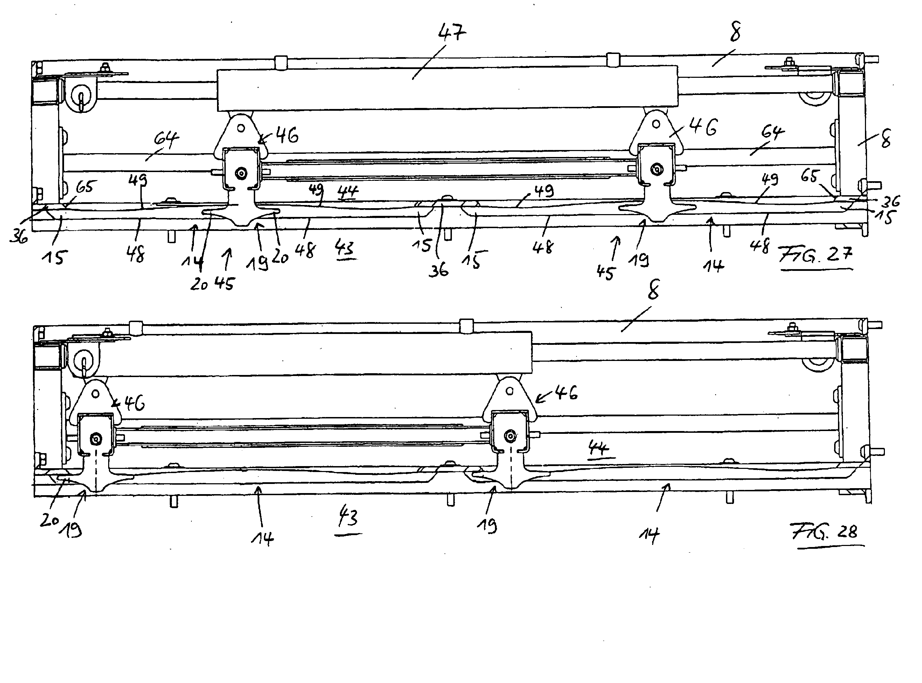

Die Figuren 27 bis 32 veranschaulichen eine konstruktive Ausgestaltung eines Flachrechens entsprechend dem zu den Figuren 4 bis 11 beschriebenen Prinzip. In ihrem Aufbau bzw. ihrer Wirkungsweise mit dieser prinzipiellen Ausführungsform übereinstimmende Teile sind der Einfachheit halber mit denselben Bezugsziffern bezeichnet. Insofern wird auf die vorstehende Beschreibung verwiesen. Auch bei diesem Flachrechen können Modifizierungen bezüglich der Ausbildung der Rechengutabstreifer 19 vorgenommen werden. Insofern wird auf die vorstehenden Ausführungen, insbesondere gemäß der Figuren 15 bis 25 und die Bürstenvariante gemäß der Figur 26, verwiesen.

Bei der Ausführungsform nach den Figuren 27 bis 32 sind die Rechenstäbe 14 gemäß der Ausführungsform nach der Figur 4 ausgebildet, wobei die Stirnfläche 49 weniger stark nach oben gewölbt gestaltet ist. Der Antrieb 47 ist als doppelseitiger fluidbetätigter Zylinder ausgebildet, wobei der Fluiddruck beispielsweise mittels der Bewegung des Wasserrades 22 erzeugt wird. Mit dem Zylinder sind die Schlitten 46 verbunden, die auf horizontal angeordneten Schienen 64 gleiten, die parallel zueinander und horizontal angeordnet sind.

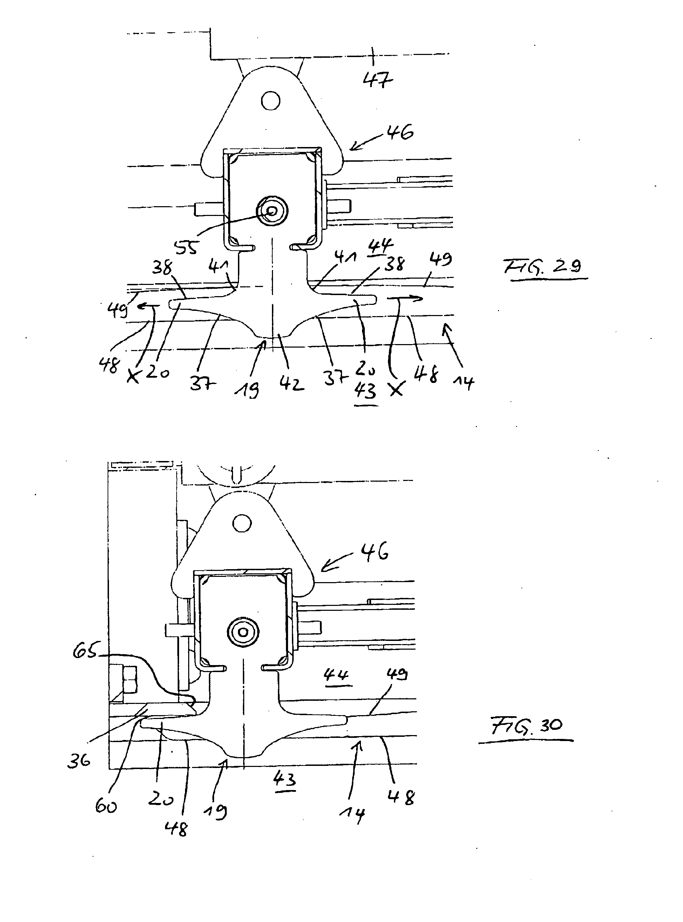

Bei dieser Ausführungsform ist die Stirnfläche 38 des jeweiligen Endes 20 des Abstreifers 19 zur Horizontalen geringfügig geneigt, und zwar zum freien Ende hin nach unten geneigt, so dass in der Endstellung des Abstreifers 9, wie sie in Figur 30 gezeigt ist, zwischen dem Ende 20 und dem Querträger 36 der Spalt 60 gebildet ist. Der jeweilige Rechenstab 14 ist, wie zur grundsätzlichen Flachenrechenausführung verdeutlicht, zum Ende 20 hin flacher werdend gestaltet. Die durchströmte Höhe des Spaltes zwischen benachbarten Rechenstäben ist bei der Ausführungsform nach den Figuren 27 bis 30 geringer als bei der Ausführungsform nach Figur 4, bezogen auf die Symmetrieachse des Rechenstabes 14.

Der Abstreifer 19 ist in seiner Mittelstellung, somit in seine Stellung symmetrisch zur Symmetrieachse so platziert, dass die Enden 20 des Abstreifers 19 etwa auf halber Höhe des Rechenstabes 14 angeordnet sind, wie es der Darstellung der Figur 29 anschaulich zu entnehmen ist. Der Vorsprung 42, der sich an die nach innen gewölbte Stirnfläche 37 anschließt, ist mit seinem unteren Endbereich deutlich unterhalb der Stirnfläche 48 des Rechenstabes 14 angeordnet. Die Verfahrrichtung der Abstreifer 15 ist horizontal und damit parallel zur Anordnung der Stirnfläche 48 der Rechenstäbe 14.

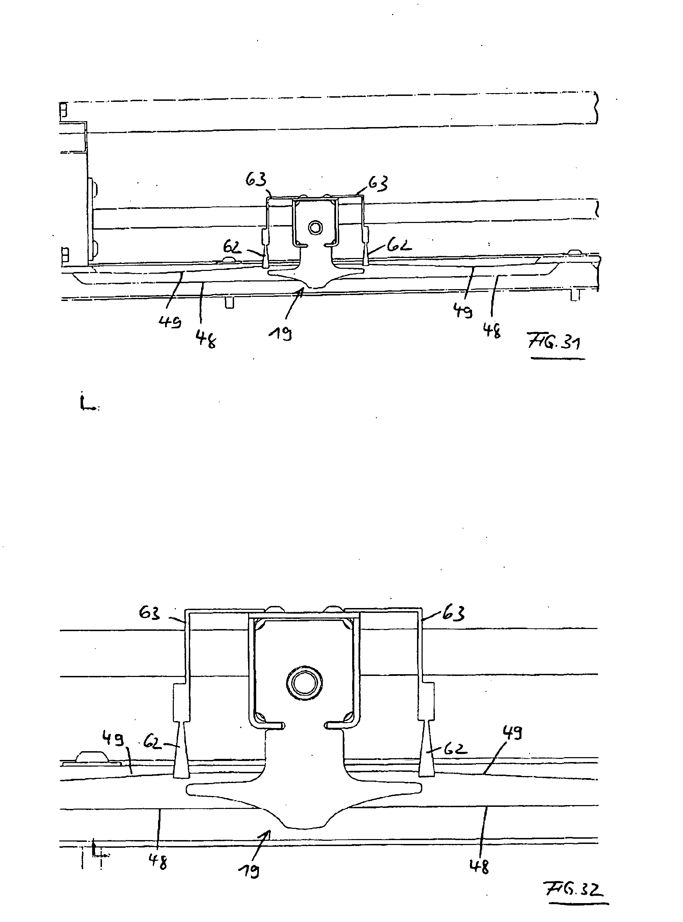

Die Figuren 31 und 32 zeigen für die in den Figuren 27 bis 30 gezeigten Ausführungsform deren Zusatzausstattung mit den vor und hinter dem jeweiligen Abstreifer 9 angeordneten Bürsten 62, die in Haltern 63 gelagert sind, wobei die Halter 63 mit der Aufnahme 54 verbunden sind. Es wird insofern auf die Ausführungen zur Figur 26 verwiesen.

Die in den diversen beschriebenen Ausführungsformen veranschaulichte Rechenvorrichtung ist insbesondere geeignet für den Einsatz in der Abwasser- und Regelwasserbehandlung zur Rückhaltung von im Abwasser mitgeführten Feststoffen an Entlastungen. Durch das Zusammenwirken der besonders gestalteten Rechenstäbe 14 und der zwischen benachbarter Rechenstäbe eingeführten Abstreifer wird das Rechengut schonend, auf kurzem Wege abgestreift. In der Rechenvorrichtung sind Ruhezonen angeordnet, die als die flachen, breiten Querträger ausgebildet sind, den Wasserdruck aufnehmen und in eine Gitterrahmenkonstruktion, die insbesondere modular aufgebaut ist, abtragen. Die Querträger 36 sind insbesondere mit Fasen 65 versehen. Wegen der Anfasung können auf den Rechenstäben 14 auf deren Reinwasserseite 44 liegende Festkörper, insbesondere Steine, einfach auf die Ruhezonen, insbesondere die Querträger 36 geschoben werden können und so ein Versagen der Rechenvorrichtung wegen Verklemmen ausgeschlossen werden. Die Ruhezone ist eine Ablösezone. Da dort kein Wasserdruck herrscht, können größere Ansammlungen von Rechengut nach unten absinken und vom Abwasser abtransportiert werden. Die Rechenstäbe sind so geformt, dass sie wenig Material benötigen. Die Querträger sind beispielsweise alle 65 cm vorgesehen, womit zwischen den Stabrechen-Modulen ein Abstand entsteht, der als Ruhezone sowohl auf der Abwasser- und Reinwasserseite dient. Die Abstreifanordnung ist aus einzelnen Abstreiferplatten bzw. Abstreifersegmenten gebildet, die beispielsweise mit einer Halterung verkeilt und/oder, verschraubt sind, damit einzelne Abstreifer (Abstreifsegmente/Abstreifplatten) austauschbar sind. Die Abstreifer 19 sind so ausgebildet, dass aufgrund der verjüngten Vorsprünge des Abstreifers dieser die Wasserinhaltsstoffe, die zwischen die Rechenstäbe gelangen, automatisiert zur Abwasserseite 43, somit nach unten herausschert. Der obere Teil des Abstreifers hebt auf dem Rechen liegende Rückstände aus den Stababständen heraus und es erfolgt eine Zwischenlagerung der Rückstände auf den Querträgern. Die Reduzierung des Strömungsdrucks mit Abstreifer ist für einen schonenden Rechenguttransport evident und vor allem qualitätssteigernd, da insbesondere Toilettenpapier nicht zerkleinert wird.

Aufgrund der vorhandenen Querträger 26 ist es nicht erforderlich, dass die Schmutzstoffe über die gesamte Länge der Rechenvorrichtung transportiert werden. Es wird vielmehr das Rechengut nur zu den Enden des jeweiligen Rechenstabes geschoben. Die Abstreifer werden auf der Reinwasserseite 44 geführt, womit die Rechenvorrichtung insgesamt besonders störungsunanfällig ist. Die Abstreifer bestehen vorzugsweise aus Kunststoff, insbesondere aus Polyethylen.

Die Rechenvorrichtung arbeitet kontinuierlich während der Entlastung und ist auf Dauerbetrieb eingestellt.

## Patentansprüche

1. Rechenvorrichtung (9) mit einer Einrichtung (19) zur Räumung des Rechenguts, insbesondere zur Rückhaltung von in Abwasser mitgeführten Feststoffen (40) an Entlastungen (6), wobei die Rechenvorrichtung (9) durchströmt wird, mit einer Abwasserseite (43) und einer Reinwasserseite (44), und eine Vielzahl von parallel zueinander angeordnete Rechenstäbe (14) aufweist, die in Querträgern (36) gelagert sind, sowie die Einrichtung (19) zur Räumung des Rechenguts Abstreifer (19) für das Rechengut aufweist, wobei jeweils zwischen benachbarten Rechenstäben (14) ein Abstreifer (19) angeordnet ist, der in Längserstreckung der Rechenstäbe (14) verfahrbar ist, sowie der Abstreifer (19) zumindest in seiner Verfahrrichtung einen sich verjüngenden Vorsprung (20) aufweist, wobei der sich verjüngende Vorsprung (20) auf seiner Abwasserseite (43) bezüglich der Verfahrrichtung des Vorsprungs (20) verjüngt und der Vorsprung (20) zwischen den benachbarten Rechenstäben (14) angeordnet ist, **dadurch gekennzeichnet, dass** der sich verjüngende Vorsprung (20) auf seiner Reinwasserseite (44) bezüglich der Verfahrrichtung des Vorsprungs (20) verjüngt.

2. Vorrichtung nach Anspruch 1, **dadurch gekennzeichnet, dass** der Vorsprung (20) beim Verfahren in seiner Verfahrrichtung mit einer Bewegungskomponente in Richtung der Abwasserseite (43) oder die Reinwasserseite (44) der benachbarten Rechenstäbe (14) bewegt wird.

3. Vorrichtung nach Anspruch 1 oder 2, **dadurch gekennzeichnet, dass** die Rechenvorrichtung (9) von unten nach oben durchströmt wird, mit einer unteren Abwasserseite (43) und einer oberen Reinwasserseite (44).

4. Vorrichtung nach einem der Ansprüche 1 bis 3, **dadurch gekennzeichnet, dass** die zwischen den Rechenstäben (14) angeordneten Abstreifer (19) hin und her verfahrbar sind, wobei der jeweilige Abstreifer (19) auf abgewandten Seiten die sich verjüngenden Vorsprünge (20) aufweist.

5. Vorrichtung nach Anspruch 4, **dadurch gekennzeichnet, dass** die Vorsprünge (20) in den Endstellungen des Abstreifers (19) die Querträger (36) im Bereich von Ablageflächen (59) der Querträger (36) hintergreifen, wobei die Ablageflächen (59) der Abwasserseite (43) der Vorrichtung zugewandt sind.

6. Vorrichtung nach Anspruch 5, **dadurch gekennzeichnet, dass** in den Endstellungen des Abstreifers (19) zwischen den Vorsprüngen (20) und den Ablageflächen (59) ein sich in Richtung des freien Endes des jeweiligen Vorsprungs (20) erweiternder Spalt (60) gebildet ist.

7. Vorrichtung nach Anspruch 5 oder 6, **dadurch gekennzeichnet, dass** der Abstreifer (19) in seinen Endstellungen die Querträger (36) entlang Linien (61) kontaktiert.

8. Vorrichtung nach einem der Ansprüche 1 bis 7, **dadurch gekennzeichnet, dass** der jeweilige Abstreifer (19) plattenförmig ausgebildet ist.

9. Vorrichtung nach einem der Ansprüche 1 bis 8, **dadurch gekennzeichnet, dass** die Vorsprünge (20) des jeweiligen Abstreifers (19) gekrümmt sind, insbesondere nach innen gekrümmt sind.

10. Vorrichtung nach einem der Ansprüche 1 bis 9, **dadurch gekennzeichnet, dass** der Abstreifer (19) auf der Abwasserseite (43), an den Vorsprung (20) angrenzend bzw. zwischen den Vorsprüngen (20) dieses Abstreifers (19), einen erhabenen Abschnitt (42), insbesondere einen Abschnitt (42), dessen abwasserseitige Kontur stetig gekrümmt oder annähernd parallel zur Verfahrrichtung des Abstreifers (19) verläuft, aufweist.

11. Vorrichtung nach einem der Ansprüche 1 bis 10, **dadurch gekennzeichnet, dass** der Abstreifer (19) auf der Abwasserseite (43) aus den zwischen den Rechenstäben (14) gebildeten Spalt ragt.

12. Vorrichtung nach einem der Ansprüche 1 bis 11, **dadurch gekennzeichnet, dass** eine Vielzahl nebeneinander angeordneter Abstreifer (19) in einer Aufnahme (54) gehalten sind und diese Aufnahme (54) verstellbar ist, insbesondere derart, dass die Abstreifer (19) in Richtung der Abwasserseite (13) und/oder der Reinwasserseite (44) verstellbar sind.

13. Vorrichtung nach Anspruch 12, **dadurch gekennzeichnet, dass** die Abstreifer (19) mit fluchtenden Löcher versehen sind und diese Löcher ein Haltestab (55) durchsetzt, der in der Aufnahme (54) gelagert ist, wobei die Aufnahme (54) die Abstreifer (19) hintereinander eingesteckt und bezüglich des Haltestabs (55) verdrehsicher aufnimmt.

14. Vorrichtung nach einem der Ansprüche 1 bis 13, **dadurch gekennzeichnet, dass** die Rechenvorrichtung (9) als Flachrechen oder Bogenrechen ausgebildet ist.

15. Vorrichtung nach einem der Ansprüche 1 bis 14, **dadurch gekennzeichnet, dass** der jeweilige Rechenstab (14), zwischen der Rechenstabmitte und den Rechenstabenden (15) in Richtung der Rechenstabenden (15) verjüngend ausgebildet ist.

16. Vorrichtung nach einem der Ansprüche 1 bis 15, **dadurch gekennzeichnet, dass** gebogene Rechenstäbe (14) auf der Abwasserseite (43) eine größere Krümmung aufweisen als auf der Reinwasserseite (44), insbesondere auf der Abwasserseite (43) und der Reinwasserseite (44) eine Kreisbogenkrümmung aufweisen.

17. Vorrichtung nach einem der Ansprüche 1 bis 16, **dadurch gekennzeichnet, dass** die Rechenvorrichtung (9) zwischen den Enden (15) der Rechenstäbe (14) nach oben gebogen ist.

18. Vorrichtung nach einem der Ansprüche 1 bis 17, **dadurch gekennzeichnet, dass** die Abstreifer (19) entlang einer Kreisbahn verfahrbar sind, deren Radius dem Radius der Rechenstäbe (14) auf deren Abwasserseite (43) oder deren Reinwasserseite (44) entspricht.

19. Vorrichtung nach einem der Ansprüche 1 bis 18, **dadurch gekennzeichnet, dass** die Einrichtung (19) zur Räumung des Rechenguts fremdenergiefrei über ein Wasserrad (22) antreibbar ist.

## Claims

1. Screening device (9) having an apparatus (19) for clearing the screenings, in particular for retaining, at overflow weirs (6), solids (40) which are carried along in the waste water, wherein the screening device (9) has a flow passing through it, with a waste water side (43) and a clean water side (44), and said screening device (9) has a multiplicity of screening rods (14) which are arranged parallel to one another and are mounted in crossmembers (36), and the apparatus (19) for clearing away the screenings has wiping elements (19) for the screenings, wherein a wiping element (19) which can be moved in the direction of the longitudinal extent of the screening rods (14) is respectively arranged between adjacent screening rods (14), and the wiping element (19) has a tapering projection (20) at least in its direction of movement, wherein the tapering projection (20) tapers on its waste water side (43) in the direction of movement of the projection (20), and the projection (20) is arranged between the adjacent screening rods (14), **characterized in that** the tapering projection (20) tapers on its clean water side (44) in the direction of movement of the projection (20).

2. Device according to Claim 1, **characterized in that** during the movement in its direction of movement the projection (20) is moved with a movement component in the direction of the waste water side (43) or the clean water side (44) of the adjacent screening rods (14).

3. Device according to Claim 1 or 2, **characterized in that** the screening device (9) has a flow passing through it from bottom to top, with a lower waste water side (43) and an upper clean water side (44).

4. Device according to one of Claims 1 to 3, **characterized in that** the wiping elements (19) which are arranged between the screening rods (14) can be moved to and fro, wherein the respective wiping element (19) on sides facing away from one another has the tapering projections (20).

5. Device according to Claim 4, **characterized in that** in the end positions of the wiping element (19) the projections (20) engage behind the crossmembers (36) in the region of deposition surfaces (59) of the crossmembers (36) and wherein the deposition surfaces (59) face the waste water side (43) of the device.

6. Device according to Claim 5, **characterized in that** a gap (60) which widens in the direction of the free end of the respective projection (20) is formed in the end positions of the wiping element (19), between the projections (20) and the deposition surfaces (59).

7. Device according to Claim 5 or 6, **characterized in that** in its end positions the wiping element (19) makes contact with the crossmembers (36) along lines (61).

8. Device according to one of Claims 1 to 7, **characterized in that** the respective wiping element (19) is of plate-shaped design.

9. Device according to one of Claims 1 to 8, **characterized in that** the projections (20) of the respective wiping elements (19) are curved, in particular are curved inward.

10. Device according to one of Claims 1 to 9, **characterized in that** the wiping element (19) has, on the waste water side (43) an elevated section (42) adjoining the projection (20) or between the projections (20) of this wiping element (19), in particular a projection (42) whose waste-water-side contour extends in a continuously curved fashion or approximately parallel to the direction of movement of the wiping element (19).

11. Device according to one of Claims 1 to 10, **characterized in that** the wiping element (19) projects from the gap formed between the screening rods (14) on the waste water side (43).

12. Device according to one of Claims 1 to 11, **characterized in that** a multiplicity of wiping elements (19) which are arranged one next to the other are held in a receptacle (54), and this receptacle (54) is adjustable, in particular in such a way that the wiping elements (19) can be adjusted in the direction of the waste water side (43) and/or the clean water side (44).

13. Device according to Claim 12, **characterized in that** the wiping elements (19) are provided with aligned holes, and these holes are penetrated by a securing rod (55) which is mounted in the receptacle (54), wherein the receptacle (54) accommodates the wiping elements (19) plugged one behind the other in a rotationally secure fashion with respect to the securing rod (55).

14. Device according to one of Claims 1 to 13, **characterized in that** the screening device (9) is embodied as a flat screen or as a curved screen.

15. Device according to one of Claims 1 to 14, **characterized in that** the respective screening rod (14) is embodied in such a way that it tapers in the direction of the screening rod ends (15), between the screening rod center and the screening rod ends (15).

16. Device according to one of Claims 1 to 15, **characterized in that** curved screening rods (14) have a greater degree of curvature on the waste water side (43) than on the clean water side (44), in particular have arcuate curvature on the waste water side (43) and on the clean water side (44).

17. Device according to one of Claims 1 to 16, **characterized in that** the screening device (9) is curved upward between the ends (15) of the screening rods (14).

18. Device according to one of Claims 1 to 17, **characterized in that** the wiping elements (19) can be moved along a circular path whose radius corresponds to the radius of the screening rods (14) on their waste water side (43) or their clean water side (44).

19. Device according to one of Claims 1 to 18, **characterized in that** the device (19) for clearing the screenings can be driven by means of a water wheel (22) without using extraneous energy.

## Revendications

1. Dispositif de grille (9) comprenant un dispositif (19) d'élimination de matières à filtrer, en particulier pour retenir des matières solides (40) entraînées dans les eaux usées au niveau de parties de déchargement (6), le dispositif de grille (9) étant parcouru par un écoulement, avec un côté eaux usées (43) et un côté eau propre (44) et présentant une pluralité de barres de grille (14) disposées parallèlement les unes aux autres, lesquelles sont montées dans des supports transversaux (36), et le dispositif (19) d'élimination de matières à filtrer présentant des racloirs (19) pour les matières à filtrer, un racloir (19) étant à chaque fois disposé entre des barres de grille (14) adjacentes, lequel racloir peut être déplacé dans la direction longitudinale des barres de grille (14), et le racloir (19) présentant une saillie se rétrécissant (20) au moins dans sa direction de déplacement, la saillie se rétrécissant (20) se rétrécissant sur son côté eaux usées (43) par rapport à la direction de déplacement de la saillie (20) et la saillie (20) étant disposée entre les barres de grille (14) adjacentes, **caractérisé en ce que** la saillie se rétrécissant (20) se rétrécit sur son côté eau propre (44) par rapport à la direction de déplacement de la saillie (20).

2. Dispositif selon la revendication 1, **caractérisé en ce que** la saillie (20), lors du déplacement dans sa direction de déplacement, est déplacée avec une composante de déplacement dans la direction du côté eaux usées (43) ou du côté eau propre (44) des barres de grille (14) adjacentes.

3. Dispositif selon la revendication 1 ou 2, **caractérisé en ce que** le dispositif de grille (9) est parcouru par l'écoulement de bas en haut, avec un côté eaux usées inférieur (43) et un côté eau propre supérieur (44).

4. Dispositif selon l'une quelconque des revendications 1 à 3, **caractérisé en ce que** les racloirs (19) disposés entre les barres de grille (14) peuvent être déplacés d'avant en arrière, le racloir respectif (19) présentant sur des côtés opposés les saillies se rétrécissant (20).

5. Dispositif selon la revendication 4, **caractérisé en ce que** les saillies (20) viennent en prise par l'arrière dans les positions d'extrémité du racloir (19) avec les supports transversaux (36) dans la région de surfaces de dépose (59) des supports transversaux (36), les surfaces de dépose (59) étant tournées vers le côté eaux usées (43) du dispositif.

6. Dispositif selon la revendication 5, **caractérisé en ce que** dans les positions d'extrémité du racloir (19) entre les saillies (20) et les surfaces de dépose (59) est formée une fente (60) s'élargissant dans la direction de l'extrémité libre de la saillie respective (20).

7. Dispositif selon la revendication 5 ou 6, **caractérisé en ce que** le racloir (19) vient en contact dans ses positions d'extrémité avec les supports transversaux (36) le long de lignes (61).

8. Dispositif selon l'une quelconque des revendications 1 à 7, **caractérisé en ce que** le racloir respectif (19) est réalisé en forme de plaque.

9. Dispositif selon l'une quelconque des revendications 1 à 8, **caractérisé en ce que** les saillies (20) du racloir respectif (19) sont courbées, notamment sont courbées vers l'intérieur.

10. Dispositif selon l'une quelconque des revendications 1 à 9, **caractérisé en ce que** le racloir (19) présente, du côté eaux usées (43), une section rehaussée (42) adjacente à la saillie (20) ou entre les saillies (20) de ce racloir (19), en particulier une section (42) dont le contour du côté eaux usées est muni d'une courbure constante ou s'étend approximativement parallèlement à la direction de déplacement du racloir (19).

11. Dispositif selon l'une quelconque des revendications 1 à 10, **caractérisé en ce que** le racloir (19), du côté eaux usées (43), fait saillie hors de la fente formée entre les barres de grille (14).

12. Dispositif selon l'une quelconque des revendications 1 à 11, **caractérisé en ce qu'**une pluralité de racloirs (19) disposés les uns à côté des autres sont retenus dans un logement (54), et ce logement (54) est réglable, en particulier de telle sorte que les racloirs (19) puissent être réglés dans la direction du côté eaux usées (13) et/ou du côté eau propre (44).

13. Dispositif selon la revendication 12, **caractérisé en ce que** les racloirs (19) sont munis de trous alignés, et ces trous traversent une barre de retenue (55), laquelle est montée dans le logement (54), le logement (54) recevant les racloirs (19) enfichés les uns derrière les autres et de manière immobile en rotation par rapport à la barre de retenue (55).

14. Dispositif selon l'une quelconque des revendications 1 à 13, **caractérisé en ce que** le dispositif de grille (9) est réalisé sous forme de grille plate ou de grille courbe.

15. Dispositif selon l'une quelconque des revendications 1 à 14, **caractérisé en ce que** la barre de grille respective (14) est réalisée de manière à se rétrécir dans la direction des extrémités de la barre de grille (15) entre le centre de la barre de grille et les extrémités de la barre de grille (15).

16. Dispositif selon l'une quelconque des revendications 1 à 15, **caractérisé en ce que** des barres de grille cintrées (14) présentent du côté eaux usées (43) une plus grande courbure que du côté eau propre (44), notamment présentent une courbure en arc de cercle du côté eaux usées (43) et du côté eau propre (44).

17. Dispositif selon l'une quelconque des revendications 1 à 16, **caractérisé en ce que** le dispositif de grille (9) est cintré vers le haut entre les extrémités (15) des barres de grille (14).

18. Dispositif selon l'une quelconque des revendications 1 à 17, **caractérisé en ce que** les racloirs (19) peuvent être déplacés le long d'une trajectoire circulaire dont le rayon correspond au rayon des barres de grille (14) sur leur côté eaux usées (43) ou sur leur côté eau propre (44).

19. Dispositif selon l'une quelconque des revendications 1 à 18, **caractérisé en ce que** le dispositif (19) d'élimination de matières à filtrer peut être entraîné sans apport d'énergie étrangère par le biais d'une roue hydraulique (22).
